# EUROPEAN PATENT APPLICATION

(11) **EP 3 614 005 A1**
(43) Date of publication of application: **26.02.2020**
(21) Application number: 19192344.0
(22) Date of filing: 19.08.2019
(51) Int. Cl.: F16D 1/076, F16H 55/17, G03G 15/00

(54) **DRIVE TRANSMISSION DEVICE AND IMAGE FORMING APPARATUS INCORPORATING THE DRIVE TRANSMISSION DEVICE**

(30) Priority: 21.08.2018 JP 2018154687
(71) Applicant: Ricoh Company, Ltd., Tokyo 143-8555 (JP)
(72) Inventor: NAKAMOTO, Shogo, Tokyo, 143-8555 (JP); TAKAGI, Hiroaki, Tokyo, 143-8555 (JP)
(74) Representative: J A Kemp LLP

(57) **Abstract**

A drive transmission device (20) includes a first drive transmitter (16) and a second drive transmitter (9). The first drive transmitter (16) includes an internally toothed gear (16). The second drive transmitter (9) is disposed coaxially to the first drive transmitter (16). The second drive transmitter (9) is different in material from the first drive transmitter (16). The first drive transmitter (16) is fastened to the second drive transmitter (9) and configured to transmit driving force of a drive source (10) to the second drive transmitter (9).

## Description

### BACKGROUND

### Technical Field

This disclosure relates to a drive transmission device and an image forming apparatus incorporating the drive transmission device.

### Related Art

Various types of drive transmission devices are known to include a first drive transmitter and a second drive transmitter that is disposed coaxially to the first drive transmitter and is different in material from the first drive transmitter. Such a drive transmission device also includes a drive source that generates a driving force to transmit the driving force between the first drive transmitter and the second drive transmitter.

For example, JP-2015-158268-A describes that, in a drive transmission device, a resin gear that functions as the first drive transmitter is engaged with a metal gear that functions as the second drive transmitter.

The metal gear includes four protrusions axially extending at equally spaced intervals in a rotational direction of the metal gear. The resin gear includes four ribs to be pressed into a bearing, at equally spaced intervals in the rotational direction of the resin gear, on an inner circumferential surface of a shaft hole into which a shaft of the resin gear is inserted. Each protrusion of the metal gear is inserted into each groove between the ribs of the shaft hole of the resin gear, so that the metal gear is engaged with the resin gear. The driving force is transmitted between each rib of the resin gear and each protrusion of the metal gear.

However, in the drive transmission device described in JP-2015-158268-A, when a load torque is applied, it is likely that the resin gear is twisted in the rotational direction to cause a reduction in rotational accuracy of the resin gear.

### SUMMARY

In view of the above disadvantages, an object of this disclosure is to restrain a reduction in rotational accuracy of the resin gear.

A drive transmission device includes a first drive transmitter and a second drive transmitter. The first drive transmitter includes an internally toothed gear. The second drive transmitter is disposed coaxially to the first drive transmitter and is different in material from the first drive transmitter. The first drive transmitter is fastened to the second drive transmitter and configured to transmit driving force of a drive source to the second drive transmitter.

An image forming apparatus includes a rotary body, a drive source, and the above-described drive transmission device configured to transmit driving force of the drive source to the rotary body.

According to this disclosure, a reduction in rotational accuracy of the resin gear is restrained.

### BRIEF DESCRIPTION OF THE SEVERAL VIEWS OF THE DRAWINGS

An exemplary embodiment of this disclosure will be described in detail based on the following figured, wherein:
FIG. 1 is a schematic diagram illustrating an image forming apparatus according to an embodiment of this disclosure;
FIG. 2 is a diagram illustrating a schematic configuration of a drive device that drives an intermediate transfer belt;
FIG. 3 is an enlarged view illustrating a part A of the drive device in FIG. 2;
FIG. 4 is a schematic configuration illustrating a second drive transmitter;
FIG. 5 is a graph of comparison between the gain characteristic in frequency response of the drive unit according to the present embodiment and the gain characteristic in frequency response of a drive unit according to a comparative example in which an internally toothed gear, a gear in the second drive transmitter, and an intermediate gear are made of resin material;
FIGS. 6A and 6B are graphs of variation in speed due to application of disturbance (load) at a given time after the start of driving while the intermediate transfer belt is being driven;
FIG. 7 is an enlarged view illustrating the main configuration of a drive unit according to Variation 1;
FIG. 8 is an enlarged view illustrating the main configuration of a drive unit according to Variation 2;
FIG. 9 is an enlarged view illustrating the main configuration of a drive unit according to Variation 3;
FIG. 10 is an enlarged view illustrating the main configuration of a drive unit according to Variation 4;
FIGS. 11A and 11B are enlarged views illustrating the main configuration of a drive unit according to Variation 5;
FIGS. 12A and 12B are enlarged views illustrating the main configuration of a drive unit according to Variation 6;
FIG. 13 is an enlarged view illustrating the main configuration of a drive unit according to Variation 7;
FIG. 14 is a view of an example in which the internal teeth are disposed downstream from a fastening face in a direction in which fastening force acts by screws in the internally toothed gear, corresponding to FIG. 3;
FIG. 15 is a view of an example in which the internal teeth are disposed downstream from the fastening face in the direction in which fastening force acts by screws in the internally toothed gear, corresponding to Variation 1;
FIG. 16 is a view of an example in which the internal teeth are disposed downstream from the fastening face in the direction in which fastening force acts by screws in the internally toothed gear, corresponding to Variation 2;
FIG. 17 is a view of an example in which the internal teeth are disposed downstream from the fastening face in the direction in which fastening force acts by screws in the internally toothed gear, corresponding to Variation 3;
FIG. 18 is a view of an example in which the internal teeth are disposed downstream from the fastening face in the direction in which fastening force acts by screws in the internally toothed gear, corresponding to Variation 4;
FIG. 19 is a view of an example in which the internal teeth are disposed downstream from the fastening face in the direction in which fastening force acts by screws in the internally toothed gear, corresponding to Variation 5;
FIG. 20 is a view of an example in which the internal teeth are disposed downstream from the fastening face in the direction in which fastening force acts by screws in the internally toothed gear, corresponding to Variation 6;
FIG. 21 is an enlarged view illustrating the main configuration of a drive unit according to Variation 8;
FIG. 22 is an enlarged view illustrating the main configuration of a drive unit according to Variation 9;
FIG. 23 is an enlarged view illustrating the main configuration of a drive unit according to Variation 10;
FIG. 24 is an enlarged view illustrating the main configuration of a drive unit according to Variation 11;
FIG. 25 is an enlarged view illustrating the main configuration of a drive unit according to Variation 12;
FIG. 26 is a view of an example in which the second drive transmitter includes a single body in the drive unit according to Variation 12;
FIG. 27 is a view of an example in which a fastening target member is fixed to a metal shaft by a key in the drive unit according to Variation 12;
FIG. 28 is a view of an example in which the fastening target member is fixed to the metal shaft by a pin in the drive unit according to Variation 12;
FIGS. 29A and 29B are views of examples in which the fastening target member is fixed to the metal shaft by frictional fastening in the drive unit according to Variation 12;
FIG. 30 is a view of an example in which the second drive transmitter includes a joint;
FIG. 31 is a view of an example in which the second drive transmitter includes a pulley;
FIG. 32 is a view of an example in which the second drive transmitter includes the shaft of a drive roller, an externally toothed gear, and a fastening target member; and
FIG. 33 is a view of an example in which the second drive transmitter includes the shaft of a photoconductor, the externally toothed gear, and the fastening target member.

### DETAILED DESCRIPTION

It will be understood that if an element or layer is referred to as being "on", "against", "connected to" or "coupled to" another element or layer, then it can be directly on, against, connected or coupled to the other element or layer, or intervening elements or layers may be present. In contrast, if an element is referred to as being "directly on", "directly connected to" or "directly coupled to" another element or layer, then there are no intervening elements or layers present. Like numbers referred to like elements throughout. As used herein, the term "and/or" includes any and all combinations of one or more of the associated listed items.

Spatially relative terms, such as "beneath", "below", "lower", "above", "upper" and the like may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements describes as "below" or "beneath" other elements or features would then be oriented "above" the other elements or features. Thus, term such as "below" can encompass both an orientation of above and below. The device may be otherwise oriented (rotated 90 degrees or at other orientations) and the spatially relative descriptors herein interpreted accordingly.

Although the terms first, second, etc. may be used herein to describe various elements, components, regions, layers and/or sections, it should be understood that these elements, components, regions, layer and/or sections should not be limited by these terms. These terms are used to distinguish one element, component, region, layer or section from another region, layer or section. Thus, a first element, component, region, layer or section discussed below could be termed a second element, component, region, layer or section without departing from the teachings of the present disclosure.

The terminology used herein is for describing particular embodiments and examples and is not intended to be limiting of exemplary embodiments of this disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Descriptions are given, with reference to the accompanying drawings, of examples, exemplary embodiments, modification of exemplary embodiments, etc., of a drive transmission device and an image forming apparatus according to exemplary embodiments of this disclosure. Elements having the same functions and shapes are denoted by the same reference numerals throughout the specification and redundant descriptions are omitted. Elements that do not demand descriptions may be omitted from the drawings as a matter of convenience. Reference numerals of elements extracted from the patent publications are in parentheses so as to be distinguished from those of exemplary embodiments of this disclosure.

This disclosure is applicable to any heating device, and is implemented in the most effective manner in any electrophotographic image forming apparatus.

In describing preferred embodiments illustrated in the drawings, specific terminology is employed for the sake of clarity. However, the disclosure of this disclosure is not intended to be limited to the specific terminology so selected and it is to be understood that each specific element includes any and all technical equivalents that have the same function, operate in a similar manner, and achieve a similar result.

Referring now to the drawings, wherein like reference numerals designate identical or corresponding parts throughout the several views, preferred embodiments of this disclosure are described.

Descriptions are given of an embodiment applicable to a drive transmission device and an image forming apparatus incorporating the drive transmission device, with reference to the following figures.

It is to be noted that elements (for example, mechanical parts and components) having the same functions and shapes are denoted by the same reference numerals throughout the specification and redundant descriptions are omitted.

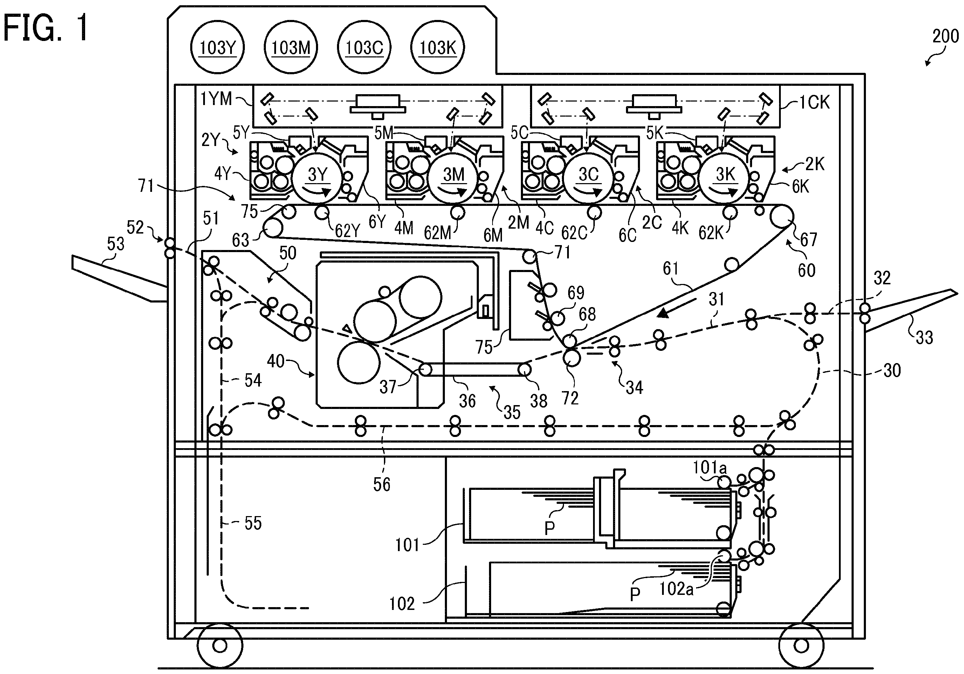

A description is given of an image forming apparatus according to this disclosure, with reference to FIG. 1.

As an image forming apparatus including a drive device to which this disclosure has been applied, one embodiment of an electrophotographic image forming apparatus (hereinafter, referred to as an image forming apparatus 200) will be described below.

First, a description is given of the basic configuration of the image forming apparatus 200 according to the present embodiment.

FIG. 1 is a schematic view illustrating an exemplary configuration of the image for

Further, size (dimension), material, shape, and relative positions used to describe each of the components and units are examples, and the scope of this disclosure is not limited thereto unless otherwise specified.

The image forming apparatus 200 includes two optical writing devices 1YM and 1CK and four process units Y, 2M, 2C, and 2K to form respective toner images of yellow (Y), magenta (M), cyan (C), and black (K). The image forming apparatus 200 further includes a sheet feed passage 30, a pre-transfer sheet conveyance passage 31, a bypass sheet feed passage 32, a bypass tray 33, a pair of registration rollers 34, a transfer belt device 35, a fixing device 40, a conveyance direction switching device 50, a sheet ejection passage 51, a pair of sheet ejecting rollers 52, and a sheet ejection tray 53. The image forming apparatus 200 further includes a first sheet feeding tray 101, a second sheet feeding tray 102, and a sheet re-entry device.

Each of the first sheet feeding tray 101 and the second sheet feeding tray 102 contains a bundle of recording sheets P that function as recording media. The bundle of recording sheets P includes a recording sheet P that functions as a recording medium. The first sheet feeding tray 101 includes a first sheet feed roller 101a and the second sheet feeding tray 102 includes a second sheet feed roller 102a. As a selected one of the first sheet feed roller 101a and the second sheet feed roller 102a is driven and rotated, an uppermost recording sheet P placed on top of the bundle of recording sheets P is fed toward the sheet feed passage 30. The sheet feed passage 30 leads to the pre-transfer sheet conveyance passage 31 that extends to a secondary transfer nip region. The recording sheet P passes through the pre-transfer sheet conveyance passage 31 immediate before the secondary transfer nip region. After having been fed from a selected one of the first sheet feeding tray 101 and the second sheet feeding tray 102, the recording sheet P passes through the sheet feed passage 30 and enters the pre-transfer sheet conveyance passage 31.

In addition, the image forming apparatus 200 further includes a housing in which parts and components for image formation are contained. A bypass tray 33 is disposed openably and closably on a side of the housing of the image forming apparatus 200 in FIG. 1. The bundle of recording media P is loaded on a top face of the bypass tray 33 when the bypass tray 33 is open with respect to the housing. The uppermost recording sheet P placed on top of the bundle of recording media P is fed toward the pre-transfer sheet conveyance passage 31 by the feed roller of the bypass tray 33.

Each of the optical writing devices 1YM and 1CK includes a laser diode, a polygon mirror, and various lenses. Each of the optical writing devices 1YM and 1CK drives the laser diode based on image data of an image that is transmitted from a personal computer. Consequently, respective photoconductors 3Y, 3M, 3C, and 3K of the process units 2Y, 2M, 2C, and 2K are optically scanned, respectively. Specifically, the photoconductors 3Y, 3M, 3C, and 3K of the process units 2Y, 2M, 2C, and 2K are rotationally driven in the counterclockwise direction in FIG. 1.

The optical writing device 1YM emits laser light beams to the photoconductors 3Y and 3M while the photoconductors 3Y and 3M are driving, by deflecting the laser light beams in an axial direction of rotation of the photoconductors 3Y and 3M. Accordingly, respective surfaces of the photoconductors 3Y and 3M are optically scanned and irradiated. Accordingly, an electrostatic latent image based on yellow image data is formed on the photoconductor 3Y and an electrostatic latent image based on magenta image data is formed on the photoconductors 3M.

Further, the optical writing device 1CK emits laser light beams to the photoconductors 3C and 3K while the photoconductors 3C and 3K are driving, by deflecting the laser light beams in an axial direction of rotation of the photoconductors 3C and 3K. Accordingly, respective surfaces of the photoconductors 3C and 3K are optically scanned and irradiated. Accordingly, an electrostatic latent image based on cyan image data is formed on the photoconductor 3C and an electrostatic latent image based on black image data is formed on the photoconductors 3K.

The process units 2Y, 2M, 2C, and 2K include the drum-shaped photoconductors 3Y, 3M, 3C, and 3K, each of which functions as an image carrier (a latent image carrier), respectively. The process units 2Y, 2M, 2C, and 2K include respective units disposed around each of the photoconductors 3Y, 3M, 3C, and 3K as a single unit, respectively. The process units 2Y, 2M, 2C, and 2K are detachably attached to the housing of the image forming apparatus 200. The process units 2Y, 2M, 2C, and 2K have respective configurations identical to each other except the colors of toners, and therefore are occasionally described in a singular form, without suffixes indicating the toner colors, which are yellow (Y), magenta (M), cyan (C), and black (K).

The process unit 2 (i.e., the process units 2Y, 2M, 2C, and 2K) includes the photoconductor 3 (i.e., the photoconductor Y, 3M, 3C, and 3K) and a developing device 4 (i.e., developing devices 4Y, 4M, 4C, and 4K) that develops an electrostatic latent image formed on a surface of the photoconductor 3 into a visible toner image. The process unit 2 (i.e., the process units 2Y, 2M, 2C, and 2K) further includes a charging device 5 (i.e., charging devices 5Y, 5M, 5C, and 5K) and a drum cleaning device 6 (i.e., drum cleaning devices 6Y, 6M, 6C, and 6K). The charging device 5 uniformly charges the surface of the photoconductor 3 (i.e., the photoconductors 3Y, 3M, 3C, and 3K) while the photoconductor 3 is rotating. The drum cleaning device 6 removes transfer residual toner remaining on the surface of the photoconductor 3 after passing a primary transfer nip region and cleans the surface of the photoconductor 3.

The image forming apparatus 200 illustrated in FIG. 1 is a tandem image forming apparatus in which the four process units 2Y, 2M, 2C, and 2K are aligned along a direction of movement of an intermediate transfer belt 61 as an endless loop.

The photoconductor 3 is manufactured by a hollow tube made of aluminum, for example, with a front face thereof covered by an organic photoconductive layer having photosensitivity. It is to be noted that the photoconductors 3Y, 3M, 3C, and 3K may include an endless belt.

The developing device 4 develops an electrostatic latent image by a two-component developer including magnetic carrier particles and non-magnetic toner. Hereinafter, the two-component developer is simply referred to as a "developer". Instead of the two-component developer, the developing device 4 may include a one-component developer that does not include magnetic carrier particles. A toner supplier replenishes corresponding color toner to a toner bottle 103 (i.e., toner bottles 103Y, 103M, 103C, and 103K).

The drum cleaning device 6 in the present embodiment of this disclosure includes a cleaning blade of polyurethane rubber as a cleaning body to be pressed against the photoconductor 3. However, the configuration is not limited thereto. In order to enhance the cleaning performance, the image forming apparatus 200 employs a rotatable fur brush to contact the photoconductor 3. The fur brush scrapes a solid lubricant into powder and applies the lubricant powder to the surface of the photoconductor 3.

An electric discharging lamp is disposed above the photoconductor 3. The electric discharging lamp is also included in the process unit 2. Further, the electric discharging lamp optically emits light to the photoconductor 3 to remove electricity from the surface of the photoconductor 3 after passing through the drum cleaning device 6.

The electrically discharged surface of the photoconductor 3 is uniformly charged by the charging device 5. Then, the above-described optical writing device 1YM starts optical scanning. The charging device 5 rotates while receiving the charging bias from a power source. Here, instead of the above-described method, the charging device 5 may employ a scorotron charging system in which a charging operation is performed without contacting the photoconductor 3.

As described above with FIG. 1, the process units 2Y, 2M, 2C, and 2K have an identical configuration to each other.

A transfer device 60 is disposed below the process units 2Y, 2M, 2C, and 2K. The transfer device 60 causes the intermediate transfer belt 61 that is an endless belt wound around multiple support rollers including rollers 63 and 69, with tension to contact the photoconductors 3Y, 3M, 3C, and 3K. While causing the intermediate transfer belt 61 to be in contact with the photoconductors 3Y, 3M, 3C, and 3K, the intermediate transfer belt 61 is rotated by rotation of one of the multiple support rollers so that the intermediate transfer belt 61 endlessly moves in a clockwise direction. By so doing, respective primary transfer nip region for forming yellow, magenta, cyan, and black images are formed between the photoconductors 3Y, 3M, 3C, and 3K and the intermediate transfer belt 61.

In the vicinity of the primarily transfer nip regions, primary transfer roller are disposed in a space surrounded by an inner circumferential surface of the intermediate transfer belt 61, that is, in a belt loop. The primary transfer rollers 62Y, 62M, 62C, and 62K, each of which functioning a primary transfer body, presses the intermediate transfer belt 61 toward the photoconductors 3Y, 3M, 3C, and 3K. A primary transfer bias is applied by respective transfer bias power supplies to the primary transfer rollers 62Y, 62M, 62C, and 62K. Consequently, respective primarily transfer electric fields are generated in the primary transfer nip region to electrostatically transfer respective toner images formed on the photoconductors 3Y, 3M, 3C, and 3K onto the intermediate transfer belt 61.

As the intermediate transfer belt 61 passes through the primary transfer nip region along the endless rotation in the clockwise direction in FIG. 1, the yellow, magenta, cyan, and black toner images are sequentially transferred at the primary transfer nip region and overlaid onto an outer circumferential surface of the intermediate transfer belt 61. This transferring operation is hereinafter referred to as primary transfer. A four-color superimposed toner image (hereinafter referred to as "four-color toner image") is formed on the outer circumferential surface of the intermediate transfer belt 61 due to the primary transfer by this superimposition.

A secondary transfer roller 72 that functions as a secondary transfer body below the intermediate transfer belt 61 in FIG. 1. The secondary transfer roller 72 contacts a secondary transfer backup roller 68 at a position where the secondary transfer roller 72 faces the secondary transfer backup roller 68 via the outer circumferential surface of the intermediate transfer belt 61, which forms a secondary transfer nip region. By so doing, the secondary transfer nip region is formed between the outer circumferential surface the intermediate transfer belt 61 and the secondary transfer roller 72.

A secondary transfer bias is applied by a transfer bias power supply to the secondary transfer roller 72. By contrast, the secondary transfer backup roller 68 disposed inside the belt loop of the intermediate transfer belt 61 is electrically grounded. As a result, a secondary transfer electric field is formed in the secondary transfer nip region.

The pair of registration rollers 34 is disposed on the right side of FIG. 1. The pair of registration rollers 34 nips and conveys the recording sheet P to the secondary transfer nip region in synchronization with arrival of the four-color toner image formed on the intermediate transfer belt 61 so as to further convey the recording sheet P toward the secondary transfer nip region. In the secondary transfer nip region, the four-color toner image formed on the intermediate transfer belt 61 is secondarily transferred onto the recording sheet P collectively due to action of the secondary transfer electric field and a nip pressure in the secondary transfer nip region. By being mixed with a white color of a surface of the recording sheet P, the four-color toner image is developed to a full-color toner image.

Transfer residual toner that has not been transferred onto the recording sheet P in the secondary transfer nip region remains on the outer circumferential surface of the intermediate transfer belt 61 after the intermediate transfer belt 61 has passed through the secondary transfer nip region. The transfer residual toner is cleaned by a belt cleaning device 75 that is in contact with the intermediate transfer belt 61.

The recording sheet P that has passed through the secondary transfer nip region separates from the intermediate transfer belt 61 to be conveyed to the transfer belt device 35. The transfer belt device 35 includes a transfer belt 36, a drive roller 37, and a driven roller 38. The transfer belt 36 having an endless belt is wound around the drive roller 37 and the driven roller 38 with taut and is endlessly rotated in the counterclockwise direction in FIG. 1 along with rotation of the drive roller 37. While nipping the recording sheet P that is conveyed from the secondary transfer nip region on the outer circumferential surface (the stretched surface) of the transfer belt 36, the transfer belt device 35 forwards the recording sheet P along with the endless rotation of the transfer belt 36 toward the fixing device 40.

The image forming apparatus 200 further includes a sheet reversing device including the conveyance direction switching device 50, a re-entry passage 54, a switchback passage 55, and a post-switchback passage 56. Specifically, after receiving the recording sheet P from the fixing device 40, the conveyance direction switching device 50 switches a direction of conveyance of the recording sheet P, in other words, a direction in which the recording sheet P is further conveyed, between the sheet ejection passage 51 and the re-entry passage 54.

When printing an image on a first face of the recording sheet P and not printing on a second face, a single-side printing mode is selected. When performing a print job in the single-side printing mode, a route of conveyance of the recording sheet P is set to the sheet ejection passage 51. According to the setting, the recording sheet P having the image on the first face is conveyed toward the pair of sheet ejecting rollers 52 via the sheet ejection passage 51 to be ejected to the sheet ejection tray 53 that is attached to an outside of the image forming apparatus 200.

When printing images on both first and second faces of a recording sheet P, a duplex printing mode is selected. When performing a print job in the duplex printing mode, after the recording sheet P having fixed images on both first and second faces is conveyed from the fixing device 40, a route of conveyance of the recording sheet P is set to the sheet ejection passage 51. According to the setting, the recording sheet P having images on both first and second faces is conveyed and ejected to the sheet ejection tray 53. By contrast, when performing a print job in the duplex printing mode, after the recording sheet P having a fixed image on the first face is conveyed from the fixing device 40, a route of conveyance of the recording sheet P is set to the re-entry passage 54.

The re-entry passage 54 is connected to the switchback passage 55. The sheet P conveyed to the re-entry passage 54 enters the switchback passage 55. Consequently, when the entire region in the sheet conveying direction of the recording sheet P enters the switchback passage 55, the direction of conveyance of the recording sheet P is reversed, so that the recording sheet P is switched back in the reverse direction. The switchback passage 55 is connected to the post-switchback passage 56 as well as the re-entry passage 54. The recording sheet P that has been switched back in the reverse direction enters the post-switchback passage 56. Accordingly, the faces of the recording sheet P is reversed upside down. Consequently, the reversed recording sheet P is conveyed to the secondary transfer nip region again via the post-switchback passage 56 and the sheet feed passage 30. A toner image is transferred onto the second face of the recording sheet P in the secondary transfer nip region. Thereafter, the recording sheet P is conveyed to the fixing device 40 so as to fix the toner image to the second face of the recording sheet P. Then, the recording sheet P passes through the conveyance direction switching device 50, the sheet ejection passage 51, and the pair of sheet ejecting rollers 52 before being ejected on the sheet ejection tray 53.

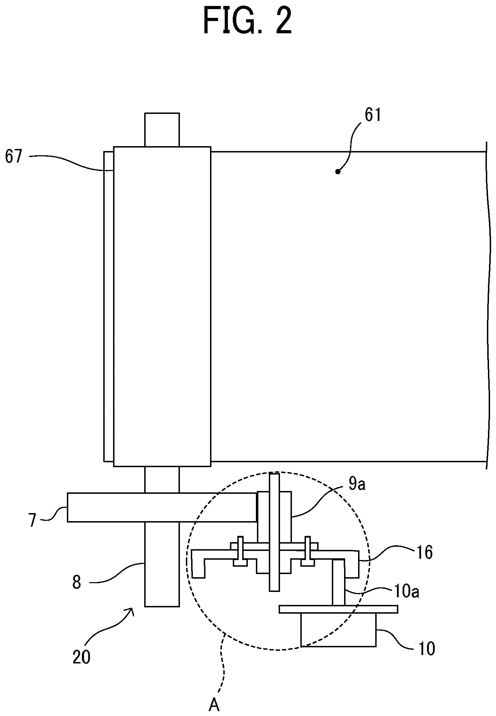

FIG. 2 is a schematic view illustrating a drive unit 20 that drives the intermediate transfer belt 61.

The drive unit 20 that functions as a drive transmission device mainly includes a drive motor 10, an internally toothed gear 16, a metal gear 9a, and an intermediate gear 7. The drive motor 10 functions as a drive source. The internally toothed gear 16 that functions as a first drive transmitter to mesh with a motor gear 10a of the drive motor 10. The metal gear 9a has external teeth and is coaxially mounted on the internally toothed gear 16. The intermediate gear 7 is mounted on a shaft 8 of a drive roller 67 that is one of the supporting rollers that support the intermediate transfer belt 61. The intermediate gear 7 engages with the metal gear 9a.

A driving force of the motor gear 10a is transmitted to the internally toothed gear 16 via the motor gear 10a, and then is transmitted from the internally toothed gear 16 to the metal gear 9a. Then, the driving force is transmitted from the metal gear 9a to the intermediate gear 7 to rotate the drive roller 67, so that the intermediate transfer belt 61 is driven to rotate.

For example, large load torque is applied to the intermediate transfer belt 61 when a thick paper enters the secondary transfer nip region. Thus, for the application of such large load torque, it is preferable that a gear included in the drive unit 20 is made of metal having high Young's modulus (rigidity). However, in a case in which the gears are made of such metal, a hard gear is engaged with another hard gear, which causes an increase in vibration or an increase in noise. Thus, it is not preferable that each gear is made of metal.

According to the present embodiment, the metal gear 9a is provided as a gear in the second drive transmitter, and the intermediate gear 7 is a resin gear. This arrangement enables the intermediate gear 7 made of the resin material to absorb the vibration in engagement between the metal gear 9a and the intermediate gear 7. In addition, since the motor gear 10a includes a metal motor shaft subjected to, for example, cutting, the internally toothed gear 16 is made of a resin material lower in hardness and in Young's modulus than the metal gear 9a. This arrangement enables the internally toothed gear 16 made of the resin material to absorb the vibration in engagement between the motor gear 10a and the internally toothed gear 16. Thus, vibration and noise can be restrained.

Thus, according to the present embodiment, since the internally toothed gear 16 and the metal gear 9a are different in material, the internally toothed gear 16 and the metal gear 9a are not formed by single resin molding. Further, the metal gear 9a made of the metallic material and the internally toothed gear 16 made of the resin material may be integrally molded by insert molding. However, as disclosed in a comparative technology, it is highly likely to result in a complex manufacturing process.

Therefore, it may be considered that the internally toothed gear 16 and the metal gear 9a are press-fitted to a rotatably supported metal shaft, so that the driving force of the motor transmitted to the internally toothed gear 16 is transmitted to the metal gear 9a through the metal shaft.

However, since the internally toothed gear 16 made of resin material is greater in thermal expansion than the metal shaft, when the temperature increases, the coupling force between the internally toothed gear 16 and the metal shaft decreases. Thus, it is likely that the internally toothed gear 16 rotates freely to the metal shaft. By contrast, in a case in which a resin shaft is employed as a shaft to which the internally toothed gear 16 and the metal gear 9a are press-fitted, when the temperature increases, the resultant force between the resin shaft and the metal gear 9a increases excessively. Thus, it is likely that the resin shaft is damaged to be broken.

Alternatively, it may be considered that a drive pin is inserted in a metal shaft to which the metal gear 9a is press-fitted, so that drive transmission is performed between the internally toothed gear 16 and the metal shaft through the drive pin. Alternatively, it may be considered that a through hole of the internally toothed gear 16 through which a metal shaft penetrates have a D shape in cross section and a portion of the metal shaft that is inserted in the through hole has a D-shape in cross section, so that drive transmission is performed between the internally toothed gear 16 and the metal shaft. However, in each case, load torque is applied to a portion near the axial center of the internally toothed gear 16 made of the resin material. Therefore, the portion to which the load torque is applied (in other words, the load torque receiving portion) is apart from a drive transmitting portion of the internally toothed gear 16 (that is, a meshing portion where the internal teeth of the internally toothed gear 16 is meshed with the motor gear 10a). Thus, since the internally toothed gear 16 is moved away from the metal gear 9a, in other words, the distance between the internally toothed gear 16 and the metal gear 9a increases, the internally toothed gear 16 that is low in rigidity and is made of the resin material deforms (twists) in the rotational direction of the internally toothed gear 16. Thus, the accuracy of rotation deteriorates.

Therefore, according to the present embodiment, the internally toothed gear 16 that is the first drive transmitter made of the resin material, which is lower in hardness and in Young's modulus and higher in the rate of thermal expansion than the metal used in the second drive transmitter 9, is fastened to the second drive transmitter 9 including the metal gear 9a. In other words, a drive transmission face of the internally toothed gear 16 that functions as a first drive transmitter is located apart from an axial center than a drive transmission face of the second drive transmitter 9 and the internally toothed gear 16 is fastened to the second drive transmitter 9 between the drive transmission face of the internally toothed gear 16 and the drive transmission face of the second drive transmitter 9 in a radial direction of the internally toothed gear 16. According to the above-described configuration, the driving force of the drive source is transmitted from the internally toothed gear 16 to the second drive transmitter 9.

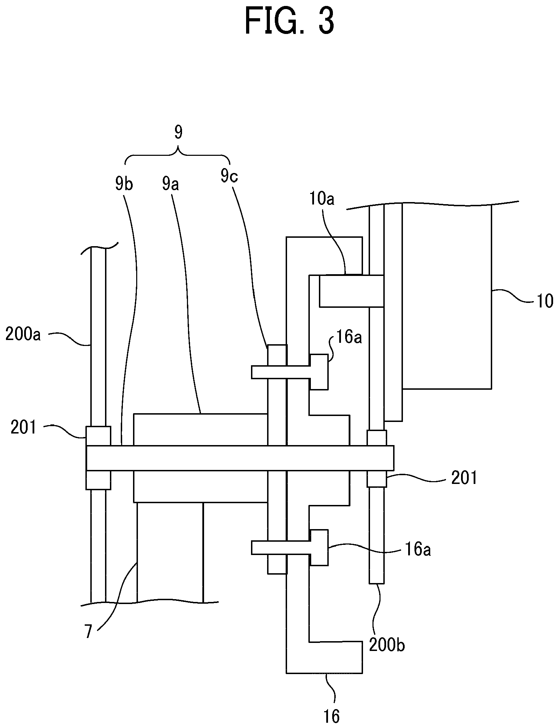

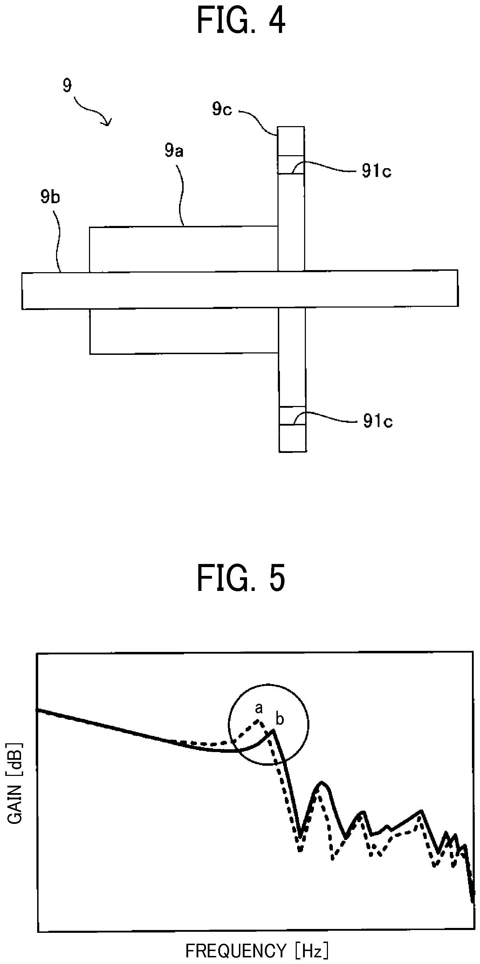

FIG. 3 is an enlarged view illustrating a part A of the drive unit 20 in FIG. 2. FIG. 4 is a schematic configuration illustrating a second drive transmitter 9.

As illustrated in FIG. 4, the second drive transmitter 9 includes the metal gear 9a, a metal shaft 9b, and a fastening target member 9c. The metal gear 9a functions as a press-fitting body made of metal to be press-fitted to the metal shaft 9b that functions as a press-fitting target body. The fastening target member 9c functions as a fastening target body including a metal plate to be press-fitted to the metal shaft 9b. The fastening target member 9c has a plurality of screw holes 91c at equally spaced intervals in the rotational direction of the fastening target member 9c. Each of the plurality of screw holes 91c has a thread groove on the inner circumferential surface. The metal shaft 9b is rotatably supported by a motor-supporting-side plate 200b and an apparatus-body-side plate 200a through respective bearings 201.

The internally toothed gear 16 that is the first drive transmitter is fastened to the fastening target member 9c by screws 16a. Each of the screws 16a functions as a fastener. According to the present embodiment, the internally toothed gear 16 is fastened to the fastening target member 9c by interposing a spring washer between the head of each screw 16a and the internally toothed gear 16, so that large fastening force is acquired.

According to the present embodiment, the driving force of the drive motor 10 that is transmitted to the internally toothed gear 16 is transmitted to the fastening target member 9c. Specifically, the driving force is transmitted from the internally toothed gear 16 to the fastening target member 9c by static frictional force around the fastening places of the contact portion between the internally toothed gear 16 and the fastening target member 9c (in other words, around the areas through which the screws 16a have penetrated) on which the fastening force acts. Then, the driving force is transmitted from the fastening target member 9c to the metal gear 9a through the metal shaft 9b.

When the internally toothed gear 16 made of the resin material expands thermally due to an increase in temperature, the thermal expansion of the internally toothed gear 16 acts in a direction in which the fastening force of the screws 16a is enhanced. Thus, even when a member to which the driving force is transmitted from the internally toothed gear 16 is lower in the rate of the thermal expansion than the internally toothed gear 16, the driving force is transmitted from the internally toothed gear 16 to the second drive transmitter 9, favorably even when the temperature increases.

According to the present embodiment, the fastening places with the screws 16a are provided outside the outer circumferential surface of the metal gear 9a. When compared with a configuration in which drive transmission is performed between the internally toothed gear 16 and the second drive transmitter 9 through a drive pin, for example, this arrangement reduces the distance between the load torque receiving portion and the drive transmitting portion of the internally toothed gear 16 (that is, the meshing portion where the internal teeth of the internally toothed gear 16 is meshed with the motor gear 10a). Thus, the internally toothed gear 16 is restrained from deforming (twisting), so that the rotational accuracy of the internally toothed gear 16 is restrained from deteriorating.

Therefore, the drive unit 20 according to the present embodiment restrains vibration in meshing and noise, enhances the durability of the drive unit, and further restrains deterioration in the rotational accuracy of the internal toothed gear 16.

Further, it is preferable that the internally toothed gear 16 is lightly press-fitted to the metal shaft 9b. Light press fit preferably performs centering, so that the internally toothed gear 16 is preferably restrained from being eccentric. Runout to the rotation of the metal shaft 9b is also restrained, and therefore the rotational accuracy of the metal shaft 9b is restrained from deteriorating. By directly press-fitting the fastening target member 9c and the metal gear 9a to the metal shaft 9b, centering is preferably performed, and therefore eccentricity is restrained preferably. Thus, the fastening target member 9c and the metal gear 9a are restrained from deteriorating in the rotational accuracy.

Further, an internally toothed gear is employed as the gear that is meshed with the motor gear 10a. By so doing, a contact ratio of the gear and the motor gear 10a is enhanced, and therefore fluctuations in rotation and generation of noise and vibration are restrained from occurring.

FIG. 5 is a graph of comparison between the gain characteristic in frequency response of the drive unit 20 according to the present embodiment and the gain characteristic in frequency response of a comparative drive unit in which the internally toothed gear 16, a gear in the second drive transmitter 9, and the intermediate gear 7 are made of resin material.

A solid line in the graph of FIG. 5 indicates the gain characteristic in frequency response of the drive unit 20 according to the present embodiment. A broken line in the graph of FIG. 5 indicates the gain characteristic in frequency response of the comparative drive unit.

As illustrated in FIG. 5, a resonance point b of the drive unit 20 according to the present embodiment indicated with the solid line (at a frequency of 64 Hz and a gain of 30 dB) is higher in resonance frequency than a resonance point a of the comparative drive unit indicated with the broken line (at a frequency of 57 Hz and a gain of 34 dB). Thus, the drive unit 20 according to the present embodiment is higher in rotating-system rigidity than the comparative drive unit.

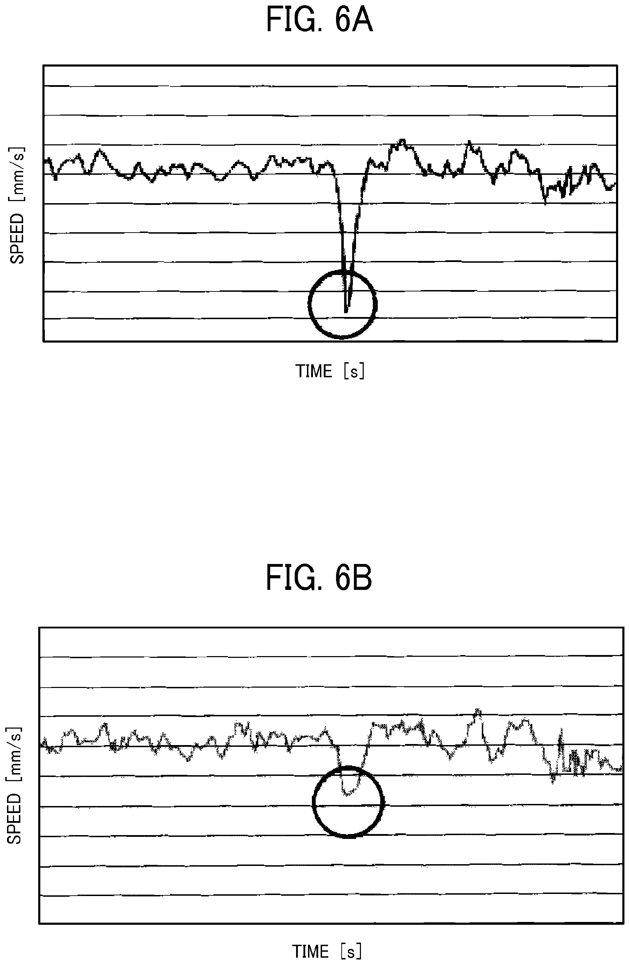

FIGS. 6A and 6B are graphs of variation in speed due to application of disturbance (load) at a given time after the start of driving while the intermediate transfer belt is being driven.

FIG. 6A illustrates the variation in speed of the intermediate transfer belt with the comparative drive unit in which the internally toothed gear 16, the gear in the second drive transmitter 9, and the intermediate gear 7 are made of the resin material. FIG. 6B illustrates the variation in speed of the intermediate transfer belt with the drive unit 20 according to the present embodiment.

As can be seen from the comparison of the graph of FIG. 6A and the graph of FIG. 6B, when the drive unit 20 according to the present embodiment is employed, the variation in speed of the intermediate transfer belt due to application of disturbance (load) is smaller (more restrained) than the comparative drive unit. It is considered that, since the drive unit 20 according to the present embodiment is higher in rotating-system rigidity than the comparative drive unit, the variation in speed of the intermediate transfer belt due to application of disturbance (load) is restrained.

Thus, by employing the drive unit 20 according to the present embodiment, the variation in speed of the intermediate transfer belt is restrained when a thick paper enters the secondary transfer nip region, so that an abnormal image such as banding is prevented from occurring.

### Variation 1.

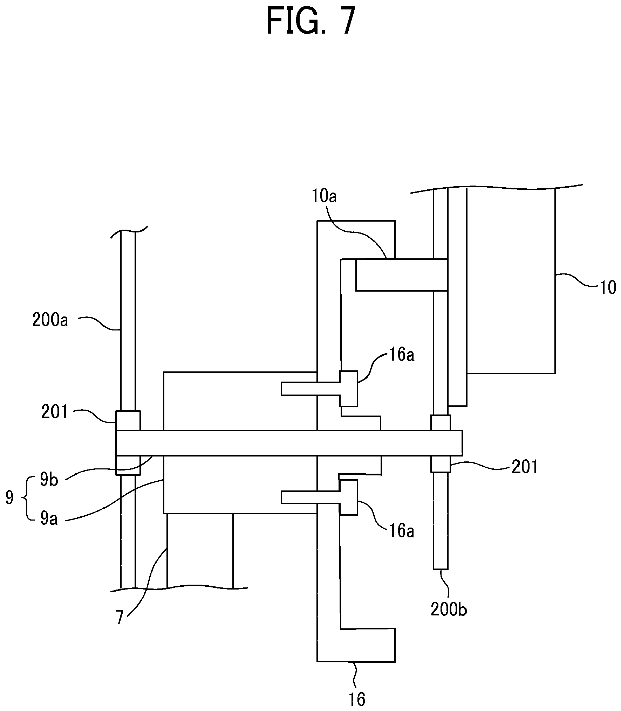

FIG. 7 is an enlarged view illustrating the main configuration of a drive unit according to Variation 1.

According to Variation 1, the internally toothed gear 16 is fixed (fastened) to the metal gear 9a. Thus, by fixing (fastening) the internally toothed gear 16 to the metal gear 9a, a fastening target member 9c is omitted, so that the number of components is reduced to achieve a reduction in cost of the device. By contrast, the fastening places are further apart from the drive transmission portion of the internally toothed gear 16 in the drive unit according to Variation 1 than in the drive unit according to the above-described embodiment. Therefore, the effect of restraining the internally toothed gear 16 from deformation (twist) due to load torque. Therefore, it is preferable that the drive unit according to Variation 1 is used for small load torque.

### Variation 2.

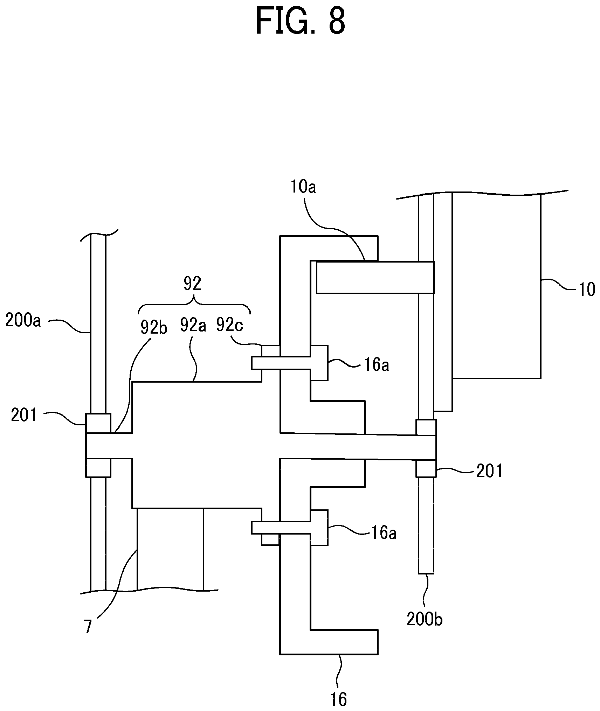

FIG. 8 is an enlarged view illustrating the main configuration of a drive unit according to Variation 2.

According to Variation 2, the second drive transmitter 9 is made of a single unit. Specifically, according to Variation 2, a metal member 92, which is made of metal and functions as a transmission unit, includes an externally toothed gear 92a, a shaft 92b, and a fastening target portion 92c. The externally toothed gear 92a is meshed with the intermediate gear 7 made of resin. The shaft 92b is rotatably supported by the motor-supporting-side plate 200b and the apparatus-body-side plate 200a via the bearings 201. The fastening target portion 92c is a portion to which the internally toothed gear 16 made of resin is fastened. Thus, the second drive transmitter including a single unit reduces the cost of the device according to a reduction in the number of components. In addition, since no press-fitting body is provided, easy assembly is achieved.

### Variation 3.

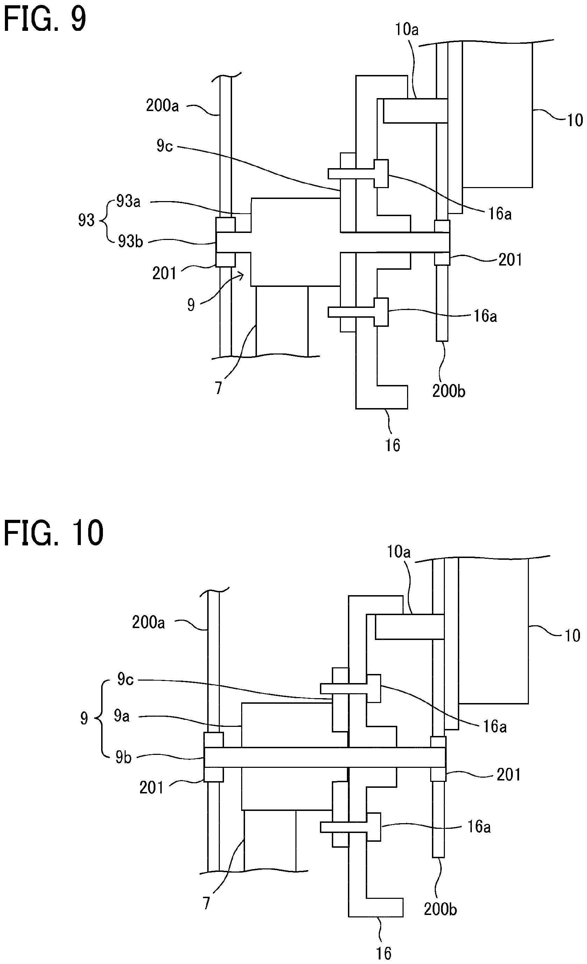

FIG. 9 is an enlarged view illustrating the main configuration of a drive unit according to Variation 3.

According to Variation 3, the second drive transmitter 9 includes a metal member 93 and the fastening target member 9c. The metal member 93 includes a shaft 93b and an externally toothed gear 93a. According to Variation 3, the metal shaft 9b is omitted, and therefore the cost of the device is reduced due to a reduction in the number of components. Further, when compared with Variation 2, Variation 3 provides the configuration in which the places for fastening the internally toothed gear 16 are easily formed outside the externally toothed gear 93a.

### Variation 4.

FIG. 10 is an enlarged view illustrating the main configuration of a drive unit according to Variation 4.

According to Variation 4, the fastening target member 9c is fixed (fastened) to the metal gear 9a. According to Variation 4, the driving force of the drive motor 10 is transmitted to the metal gear 9a without passing the metal shaft 9b. In Variation 4, the metal gear 9a is press-fitted into the metal shaft 9b, so that the metal shaft 9b is rotatably supported to the motor-supporting-side plate 200b and the apparatus-body-side plate 200a via the bearing 201. However, this disclosure may also be applied to a configuration in which the metal shaft 9b is rotatably supported to the motor-supporting-side plate 200b and the apparatus-body-side plate 200a and the metal gear 9a is rotatably supported by the metal shaft 9b.

### Variations 5 and 6.

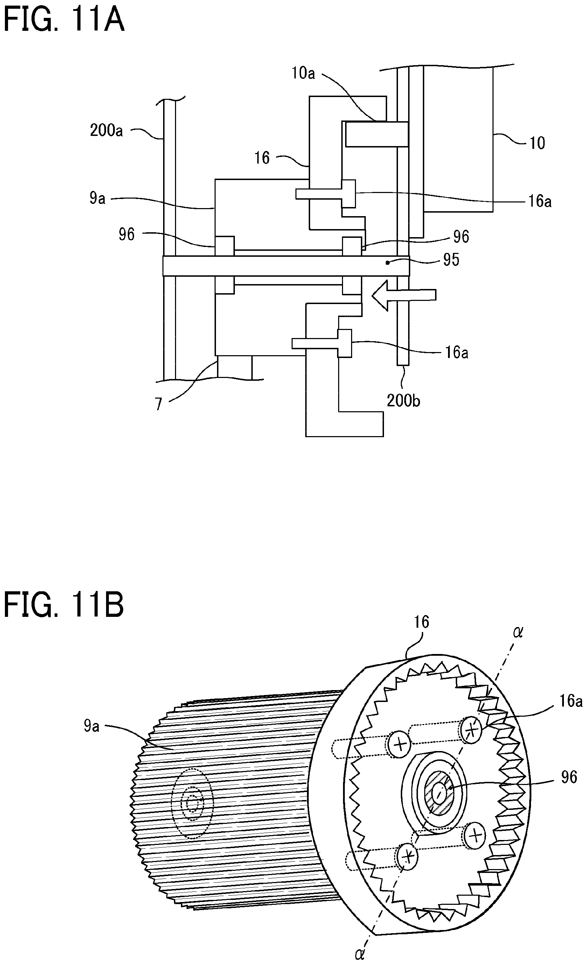

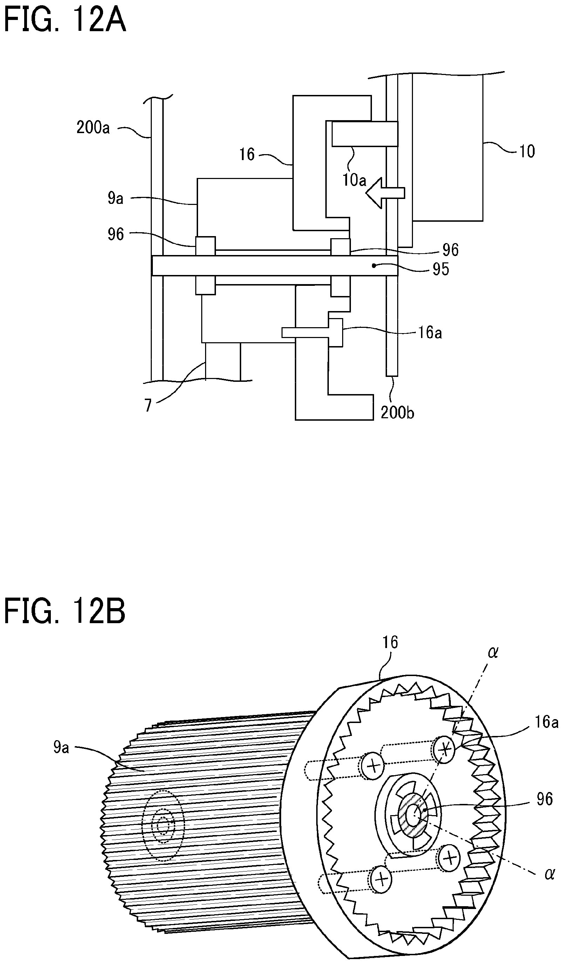

FIGS. 11A and 11B are enlarged views illustrating the main configuration of a drive unit according to Variation 5. FIGS. 12A and 12B are enlarged views illustrating the main configuration of a drive unit according to Variation 6.

FIGS. 11A and 12A are cross sectional views and FIGS. 11B and 12B are schematic perspective views. It is to be noted that FIG. 11A is a cross-sectional view taken along a broken line α-α in FIG. 11B and FIG. 12A is a cross-sectional view taken along a broken line α-α in FIG. 12B.

According to Variations 5 and 6, the metal gear 9a is rotatably supported to a fixed shaft 95 through bearings 96, and the metal gear 9a is press-fitted into the bearings 96. According to Variation 5, the internally toothed gear 16 is inserted to the metal gear 9a, resulting in fastening to the metal gear 9a. According to Variation 5, the internally toothed gear 16 is fitted to the face of a step provided at the metal gear 9a. However, a sloped face may be provided at the metal gear 9a, and the internally toothed gear 16 may be fitted to the sloped face.

By contrast, according to Variation 6, the inner circumferential face of the through hole of the internally toothed gear 16 has an uneven shape, and cut grooves are provided at portions where metal gear 9a is press-fitted to the bearing on the drive motor side. The protrusions of the through hole are inserted into the cut grooves, so that the internally toothed gear 16 is press-fitted to the bearing on the on the drive-motor side. According to Variation 6, since the internally toothed gear 16 is press-fitted into the bearing to which the metal gear 9a has been press-fitted, eccentricity and runout is preferably restrained. Thus, deterioration in the rotational accuracy is restrained.

### Variation 7.

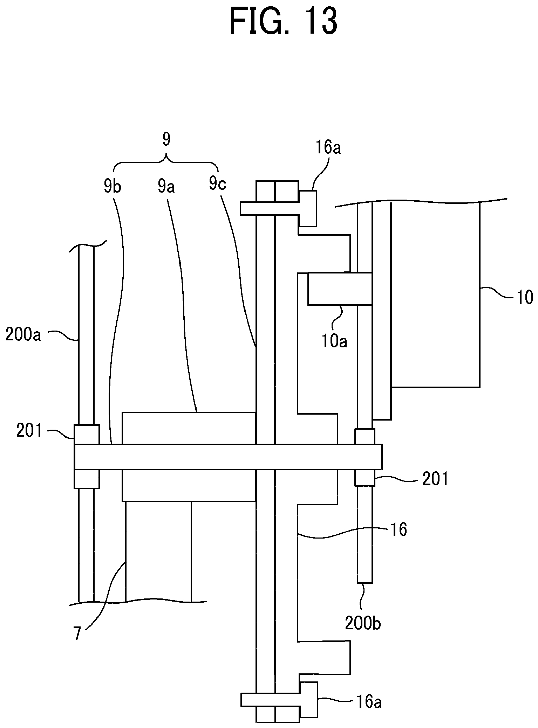

FIG. 13 is an enlarged view illustrating the main configuration of a drive unit according to Variation 7.

According to Variation 7, the portions for fastening with the screws are provided outside the internal teeth of the internally toothed gear 16. In the configuration according to Variation 7, the distance between the load torque receiving portion and the drive transmitting portion of the internally toothed gear 16 (that is, the meshing portion where the internal teeth of the internally toothed gear 16 is meshed with the motor gear 10a) is reduced (shortened). Thus, the internally toothed gear 16 is restrained from deformation (twist) of the internally toothed gear 16. In the above-described embodiment and variations, the member that is meshed with the internal teeth of the internal toothed gear 16 (e.g., the motor gear) is disposed inside the internal teeth of the internal toothed gear 16. Therefore, in a case in which the fastening portions are provided inside the internal teeth of the internal toothed gear 16, the member that is meshed with the internal teeth (e.g., the motor gear) hits the screws 16a. Consequently, it is likely that the fastening portions are not located sufficiently close to the internal teeth of the internally toothed gear 16. By contrast, according to Variation 7, even when the fastening portions are provided close to the internal teeth of the internally toothed gear 16, the screws 16a do not hit the member that is meshed with the internal teeth of the internally toothed gear 16. In other words, the internally toothed gear 16 is fastened to the second drive transmitter 9 at a portion that is further apart from an axial center of the internally toothed gear 16 than a drive transmission face of the internally toothed gear 16 from the axial center of the internally toothed gear 16. Accordingly, the configuration in which the fastening portions are provided close to the internal teeth of the internally toothed gear 16 is easily achieved.

In FIGS. 2 to 13, the internal teeth of the internally toothed gear 16 are disposed upstream from the fastening face between the second drive transmitter 9 and the internally toothed gear 16 in the direction in which the fastening force acts by the screws 16a in the internally toothed gear 16. However, the internal teeth of the internally toothed gear 16 may be disposed downstream from the fastening face in the direction in which the fastening force acts by the screws 16a in the internally toothed gear 16.

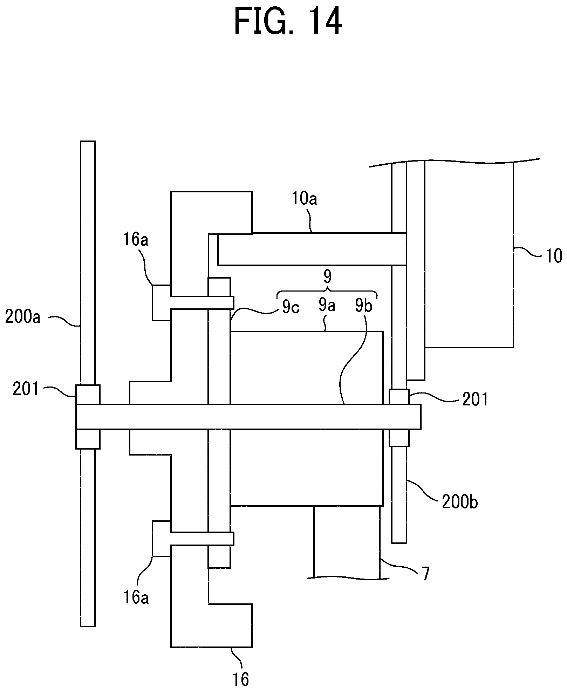

FIG. 14 is a view of an example in which the internal teeth of the internally toothed gear 16 are disposed downstream from the fastening face in the direction in which the fastening force acts by the screws 16a in the internally toothed gear 16, corresponding to FIG. 3.

As illustrated in FIG. 14, the metal gear 9a and the fastening target member 9c are disposed in the order from the drive-motor side. In FIG. 14, the fastening force acts in the right-side direction by the screws 16a in the internally toothed gear 16. The internal teeth of the internally toothed gear 16 are disposed on the right side of FIG. 14 with respect to the fastening face between the internally toothed gear 16 and the fastening target member 9c (that is, on the downstream side in the direction in which the fastening force acts).

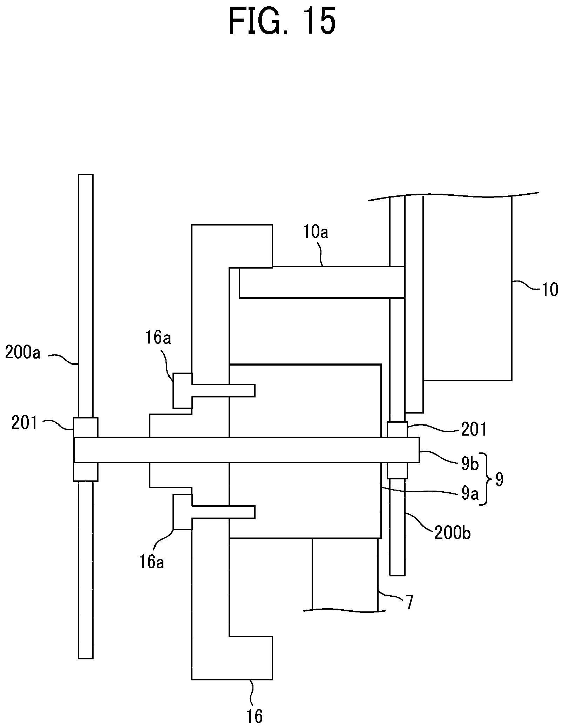

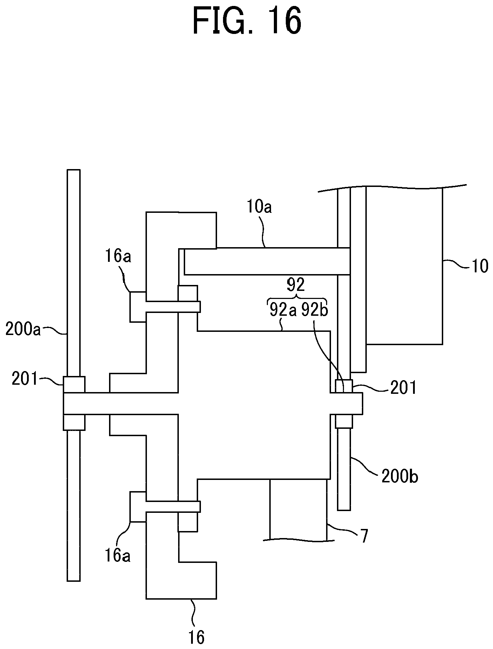

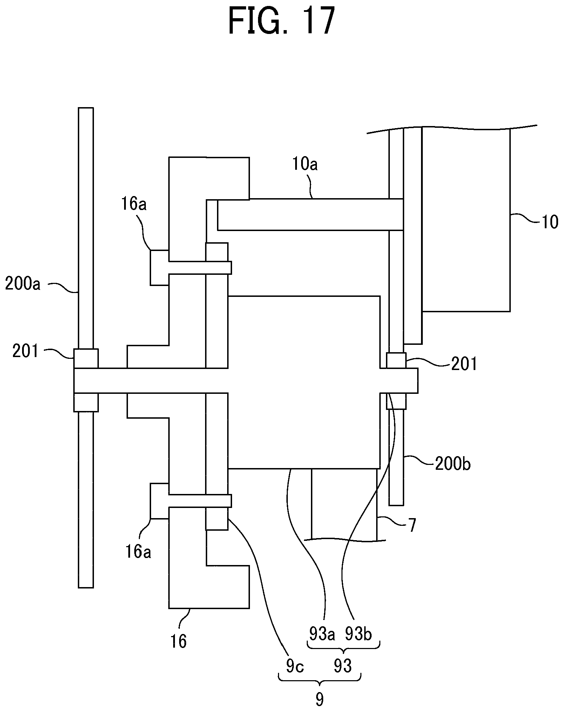

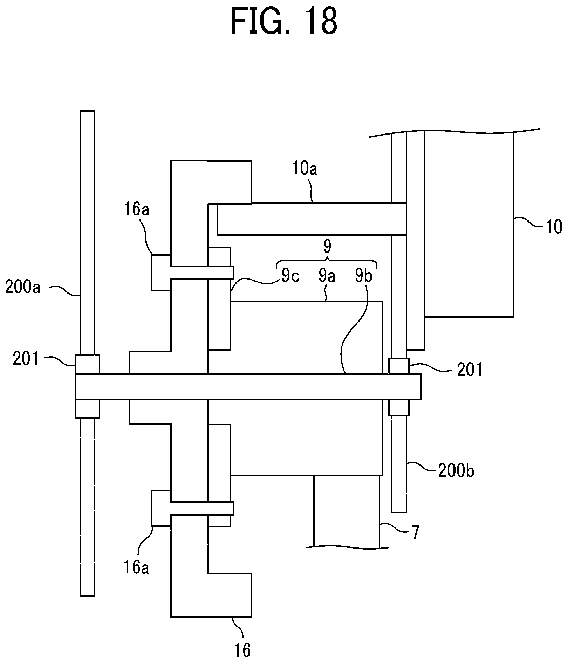

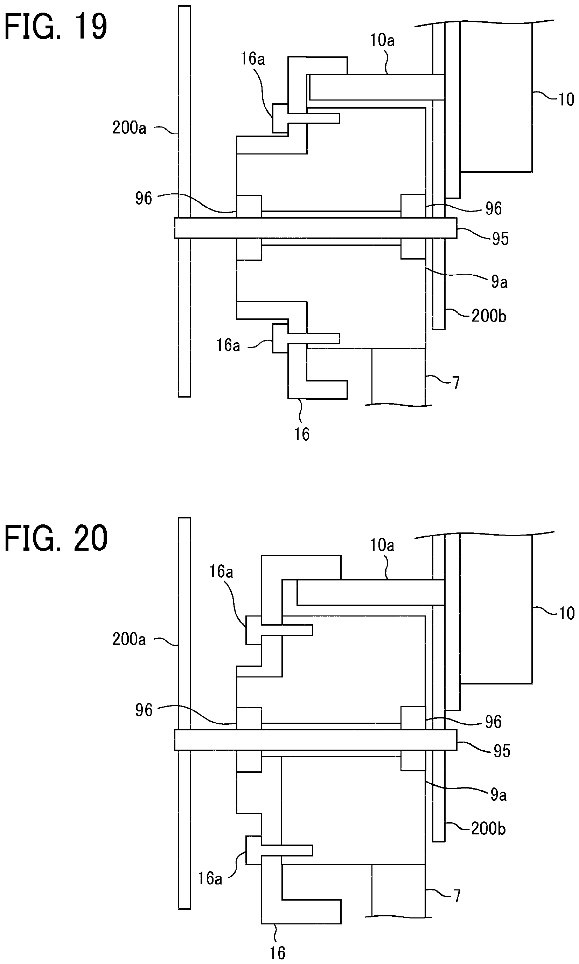

FIG. 15 is a view of an example in which the internal teeth are disposed downstream from the fastening face in the direction in which the fastening force acts by the screws 16a in the internally toothed gear 16, corresponding to Variation 1. FIG. 16 is a view of an example in which the internal teeth are disposed downstream from the fastening face in the direction in which fastening force acts by the screws 16a in the internally toothed gear 16, corresponding to Variation 2. FIG. 17 is a view of an example in which the internal teeth are disposed downstream from the fastening face in the direction in which the fastening force acts by the screws 16a in the internally toothed gear 16, corresponding to Variation 3. FIG. 18 is a view of an example in which the internal teeth are disposed downstream from the fastening face in the direction in which the fastening force acts by the screws 16a in the internally toothed gear 16, corresponding to Variation 4. FIG. 19 is a view of an example in which the internal teeth are disposed downstream from the fastening face in the direction in which the fastening force acts by the screws 16a in the internally toothed gear 16, corresponding to Variation 5. FIG. 20 is a view of an example in which the internal teeth are disposed downstream from the fastening face in the direction in which the fastening force acts by the screws 16a in the internally toothed gear 16, corresponding to Variation 6.

Thus, even in a case in which where the internal teeth are disposed downstream from the fastening face in the direction in which the fastening force acts by the screws 16a in the internally toothed gear 16, the configuration similar to each of the configurations in FIGS. 3 to 12B is applied.

As illustrated in FIGS. 14 to 20, the internal teeth of the internally toothed gear 16 are opposed to part of the external teeth of the second drive transmitter 9. The size in the axial direction of the drive unit is reduced when compared with each of the configurations illustrated in FIGS. 3 to 12B.

### Variation 8.

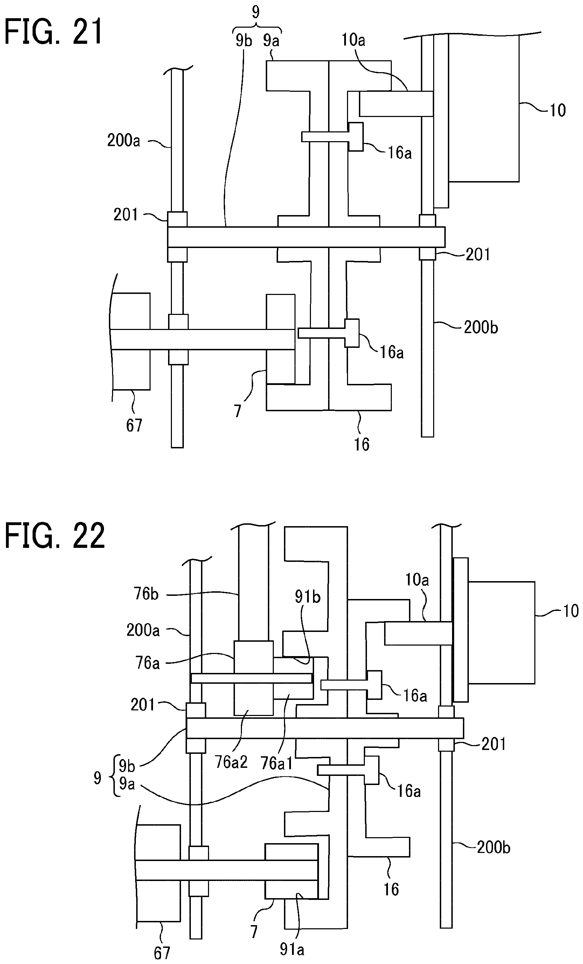

FIG. 21 is an enlarged view illustrating the main configuration of a drive unit according to Variation 8.

According to Variation 8, the metal gear 9a of the second drive transmitter 9 is an internally toothed gear. The drive unit of Variation 8 corresponds to the drive unit illustrated in FIG. 2. Specifically, the feature of the drive unit of Variation 8 is applied to the drive unit disclosed in the comparative drive unit. In other words, the drive unit of the comparative drive unit includes two internally toothed gears that are coaxially disposed and integrally formed by resin molding. As a result, the configuration of the drive unit of the comparative drive unit is low in rigidity. By contrast to the drive unit of the comparative drive unit, since the internally toothed gear 16 on the output side is metal in the configuration of Variation 8, and therefore the configuration of Variation 8 increases in rigidity. By fastening the internally toothed gear 16 made of resin to the internally toothed gear 16 made of metal, with the screws, even if the internal gear to which the driving force is transmitted from the internally toothed gear 16 is made of metal having low coefficient of thermal expansion, the driving force is preferably transmitted from the internally toothed gear 16 to the internal teeth made of metal when the temperature increases. By fastening the internally toothed gear 16 with screws, the distance of the internal teeth of the internally toothed gear 16 and the drive transmitting portion of the internally toothed gear 16 is restrained from increasing, and therefore the internally toothed gear 16 made of resin is restrained from deforming (twisting).

### Variation 9.

FIG. 22 is an enlarged view illustrating the main configuration of a drive unit according to Variation 9.

According to Variation 9, the metal gear 9a of the second drive transmitter 9 has internal teeth 91a and 91b at two places. The feature of the drive unit of Variation 9 is applied to the drive unit illustrated in the comparative drive unit. A drive transmission member having internal teeth provided at two places in the drive unit illustrated in the comparative drive unit is made of resin. However, according to Variation 9, since the drive transmission member having internal teeth at two places is made of metal, the drive unit according to Variation 9 is enhanced in rigidity than the drive unit of the comparative drive unit. Further, in the configuration of Variation 9, the drive transmission member made of metal and having internal teeth at two places and the internally toothed gear 16 made of resin are fastened with the screws. Accordingly, similar to the above-described configurations, the driving force is preferably transmitted from the internally toothed gear 16 to the internal teeth made of metal when the temperature increases. Therefore, the internally toothed gear 16 made of resin is restrained from deformation (twist).

It is to be noted that the configuration in Variation 9 further includes a drive transmitting member 76a that includes an external tooth portion 76a1 and a pulley 76a2. The external tooth portion 76a1 meshes with the internal teeth 91b of the metal gear 9a. A timing belt 76b is wound around the pulley 76a2. With this configuration, the driving force of the drive motor 10 is transmitted to drive target bodies other than the intermediate transfer belt 61, via the drive transmitting member 76a and the timing belt 76b.

### Variation 10.

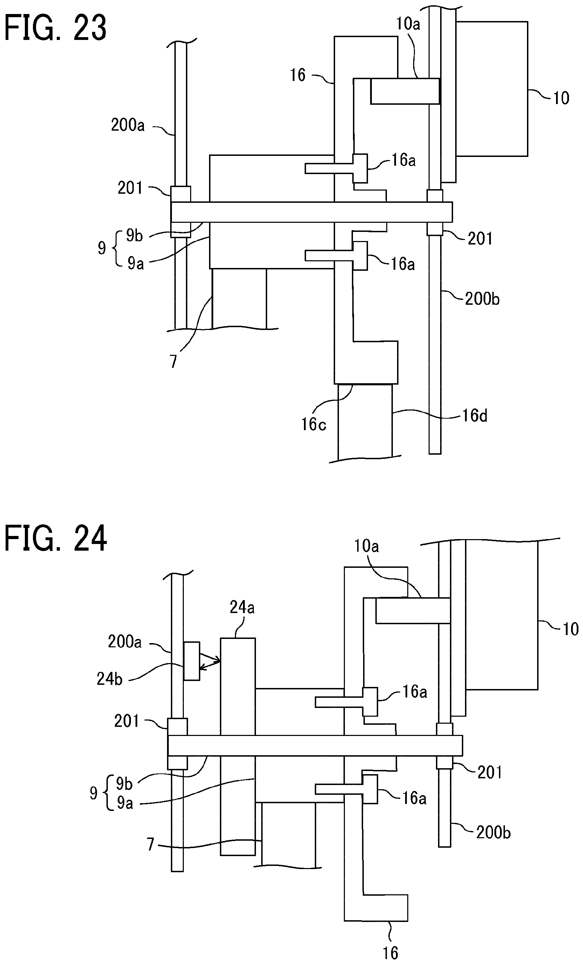

FIG. 23 is an enlarged view illustrating the main configuration of a drive unit according to Variation 10.

According to Variation 10, external teeth 16c are provided on the outer circumferential surface of the internally toothed gear 16. According to Variation 10, since the externally toothed gear that is disposed coaxially to the internally toothed gear is made of metal, the drive unit is enhanced in rigidity. By fastening the externally toothed gear made of metal and the internally toothed gear made of resin with the screws, the driving force is transmitted preferably even when the temperature increases, and therefore the internally toothed gear 16 made of resin is restrained from being deformed (twisted).

It is to be noted that the configuration in Variation 10 further includes a drive transmitting member 16d that includes an external tooth portion to mesh with the external teeth 16c of the internally toothed gear 16. With this configuration, the driving force of the drive motor 10 is transmitted to drive target bodies other than the intermediate transfer belt 61, via the drive transmitting member 16d.

### Variation 11.

FIG. 24 is an enlarged view illustrating the main configuration of a drive unit according to Variation 11.

According to Variation 11, an encoder disk 24a is attached to the metal gear 9a of the second drive transmitter 9. An optical sensor 24b is attached to the apparatus-body-side plate 200a. The optical sensor 24b detects a detection target portion provided in a circumferential direction of the encoder disk 24a, so that the number of rotations of the encoder disk 24a is detected.

### Variation 12.

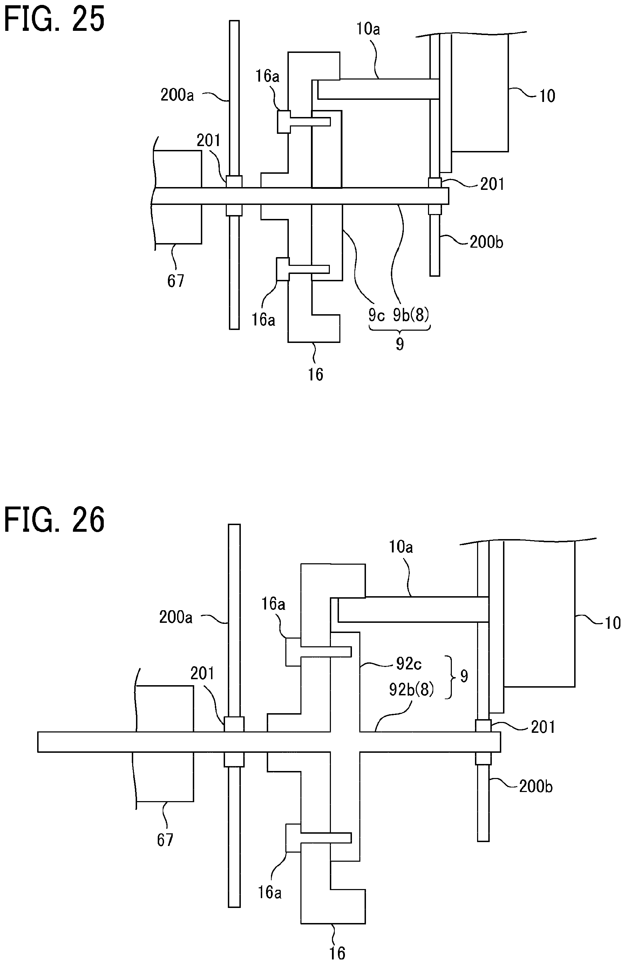

FIG. 25 is an enlarged view illustrating the main configuration of a drive unit according to Variation 12.

According to Variation 12, the second drive transmitter 9 includes the fastening target member 9c and the metal shaft 9b, so that the driving force is transmitted to the drive roller 67 at a one-stage deceleration. The metal shaft 9b that functions as the shaft of the drive roller 67. The fastening target member 9c is press-fitted into the metal shaft 9b and the internally toothed gear 16 made of resin is lightly press-fitted into the internally toothed gear 16 made of resin.

FIG. 26 is a view of an example in which the second drive transmitter includes a single body in the drive unit according to Variation 12.

Further, as illustrated in FIG. 26, the second drive transmitter 9 may be made of a single member, which is same as the configuration of Variation 2. The configuration illustrated in FIG. 26 reduces the number of components, so that the cost of the device is reduced is reduced reduction in the number of components, so that a reduction in cost of the device is achieved.

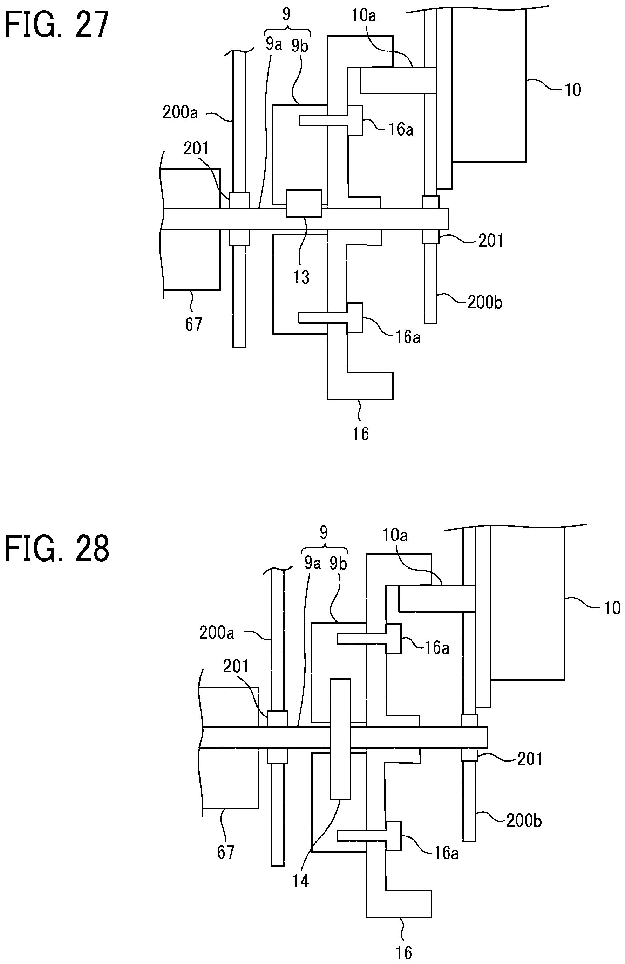

FIG. 27 is a view of an example in which the fastening target member 9c is fixed to a metal shaft by a key 13 that functions as a coupling body in the drive unit according to Variation 12.

As illustrated in FIG. 27, the fastening target member 9c may be fixed to the metal shaft 9b by the key 13. Specifically, the outer circumferential surface of the metal shaft and the inner circumferential surface of the fastening target member 9c are provided with respective grooves with which the key 13 engages. The key 13 is fitted to the grooves, resulting in fixing the fastening target member 9c to the metal.

FIG. 28 is a view of an example in which the fastening target member 9c is fixed to the metal shaft 9b by a pin 14 that functions as a coupling body in the drive unit according to Variation 12.

As illustrated in FIG. 28, the fastening target member 9c may be fixed to the metal shaft 9b by the pin 14. Examples of the pin 14 include a parallel pin and a spring pin. The configuration illustrated in FIGS. 27 and 28 facilitates assembly of the fastening target member 9c to the metal shaft 9b when compared with a configuration in which the fastening target member 9c is press-fitted into the metal shaft 9b.

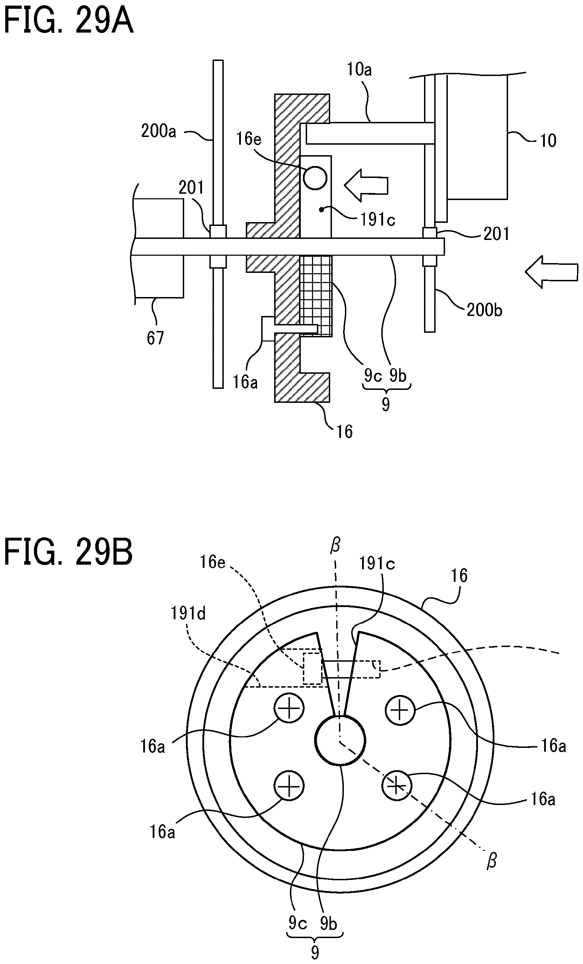

FIGS. 29A and 29B are views of examples in which the fastening target member 9c is fixed to the metal shaft 9b by frictional fastening in the drive unit according to Variation 12.

As illustrated in FIGS. 29A and 29B, the fastening target member 9c may be fixed to the metal shaft 9b by frictional fastening. FIG. 29A is a cross-sectional view taken along a broken line β-β of FIG. 29B. FIG. 29B is a schematic view in the direction of arrow of FIG. 29A.

As illustrated in FIGS. 29A and 29B, the fastening target member 9c is provided with a cut portion 191c. The inner diameter of the fastening target member 9c is slightly larger than the outer diameter of the metal shaft 9b. The fastening target member 9c is provided with a frictional fastening screw insertion hole 191d that extends in a direction perpendicular to the axial direction. The frictional fastening screw insertion hole 191d is a through hole that extends from the outer circumferential surface of the fastening target member 9c to the cut portion 191c. A frictional fastening screw hole 191e that extends in a direction perpendicular to the axial direction is provided at a portion opposed to the frictional fastening screw insertion hole 191d across the cut portion 191c.

A frictional fastening screw 16e that functions as a rotary shaft fastener is inserted into the frictional fastening screw insertion hole 191d, and then the frictional fastening screw 16e is screwed into the frictional fastening screw hole 191e that is provided across the cut portion 191c. Thus, the gap of the cut portion 191c comes narrower, so that the inner diameter of the fastening target member 9c becomes narrower. Then, the inner circumferential surface of the fastening target member 9c presses against the outer circumferential surface of the metal shaft 9b, resulting in frictional fastening of the fastening target member 9c to the metal shaft 9b.

Similarly, in the configuration of FIGS. 29A and 29B, the fastening target member 9c is easily inserted to the metal shaft 9b, resulting in achievement of easy assembly. Further, the inner circumferential surface of the fastening target member 9c is pressed to contact the outer circumferential surface of the metal shaft 9b. BY so doing, similar to the case in which the fastening target member 9c is press-fitted into the metal shaft 9b, centering of the fastening target member 9c is performed preferably. Thus, the fastening target member 9c can be preferably restrained from being eccentric.

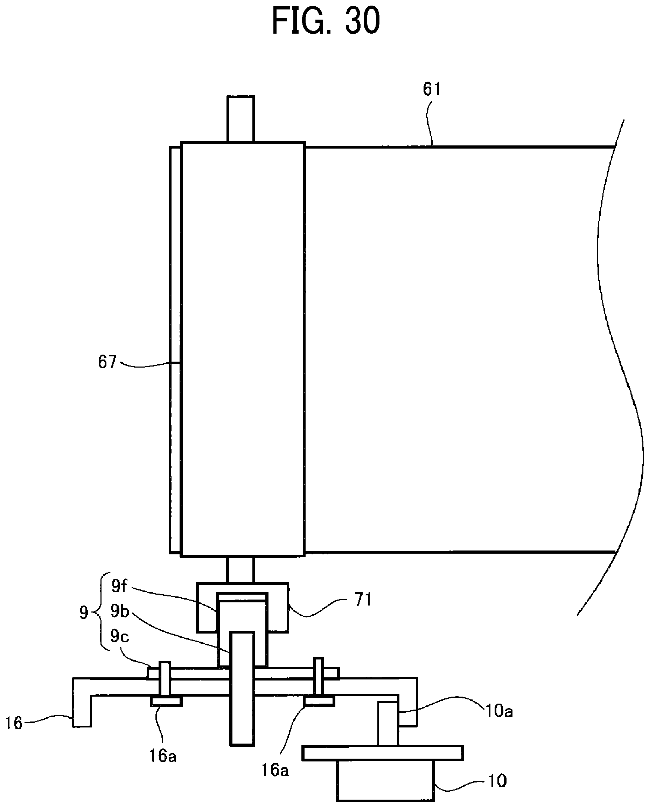

FIG. 30 is a view of an example in which the second drive transmitter 9 includes a joint 9f.

As described above, the second drive transmitter 9 includes a gear, i.e., the metal gear 9a. However, as illustrated in FIG. 30, the second drive transmitter may include a joint 9f instead of the metal gear 9a. The joint 9f is inserted into a driven-side joint 71 provided at a shaft end of the drive roller 67 to be drivingly coupled.

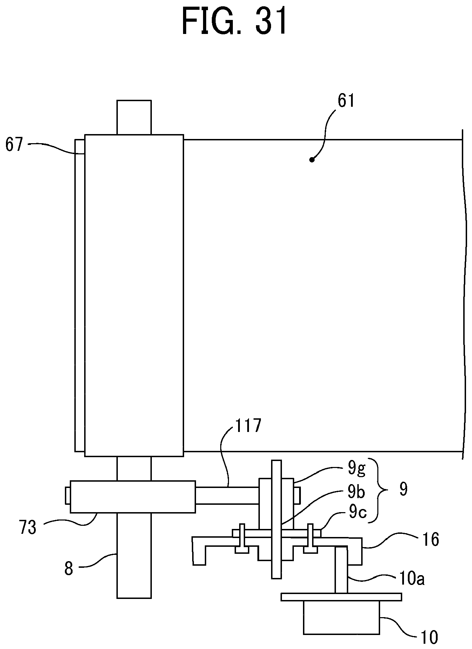

FIG. 31 is a view of an example in which the second drive transmitter 9 includes a pulley 9g.

As illustrated in FIG. 31, the pulley 9g is wound with a timing belt 117 winding around a driven-side pulley 73 provided at the shaft of the drive roller 67.

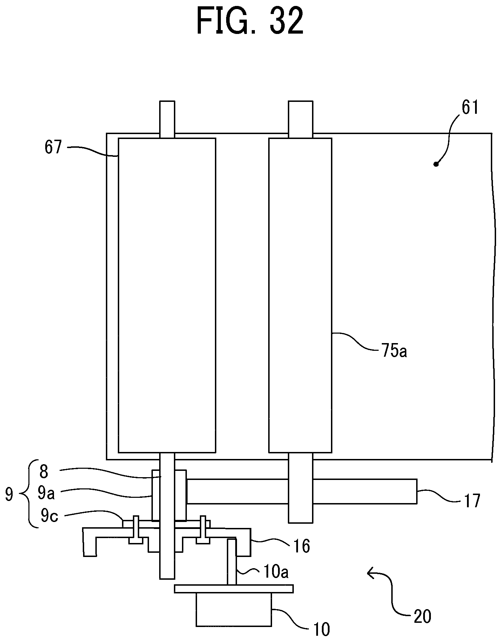

FIG. 32 is a view of an example in which the second drive transmitter 9 includes the shaft of the drive roller 67, the metal gear 9a, and the fastening target member 9c.

As illustrated in FIG. 32, the second drive transmitter 9 may include the shaft 8 of the drive roller 67, the metal gear 9a, and the fastening target member 9c. In the configuration illustrated in FIG. 32, the metal gear 9a is meshed with a cleaning gear 17 provided at the shaft of a belt cleaning roller 75a in the belt cleaning device 75. The drive unit 20 illustrated in FIG. 32 drives the intermediate transfer belt 61 and the belt cleaning roller 75a.

A rotary body to be driven by the drive unit 20 according to the present embodiment is not limited to the intermediate transfer belt 61 that functions as an intermediate transfer body.

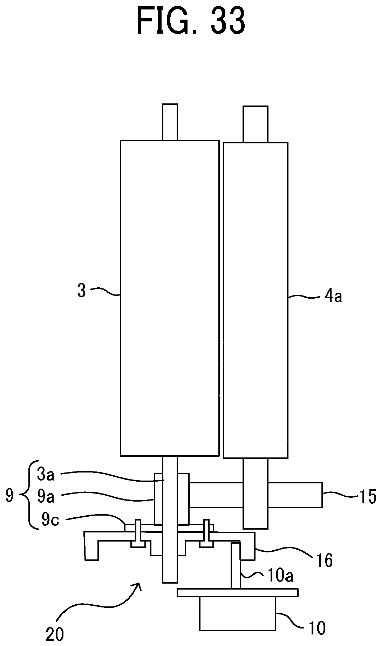

For example, FIG. 33 is a view of an example in which the second drive transmitter 9 includes a shaft 3a of the photoconductor 3, the externally toothed gear, and the fastening target member.

As illustrated in FIG. 33, the second drive transmitter 9 may include the shaft 3a of the photoconductor 3, the metal gear 9a, and the fastening target member 9c. The metal gear 9a may be meshed with a developing gear 15 that is attached to the shaft of a developing roller 4a, so that the photoconductor 3 and the developing roller 4a are driven. Further, examples of the rotary body to be driven by the drive unit 20 illustrated in FIG. 32 include the secondary transfer roller 72, a cleaning roller in the drum cleaning device 6, a conveyance roller to convey the recording medium P, a developer stirring screw, a waste-toner conveyance screw, and a fixing roller.

The configurations according to the above-descried embodiments are not limited thereto. This disclosure can achieve the following aspects effectively.

### Aspect 1.

A drive transmission device (for example, the drive unit 20) includes a first drive transmitter (for example, the internally toothed gear 16) and a second drive transmitter (for example, the second drive transmitter 9). The first drive transmitter includes an internally toothed gear. The second drive transmitter is disposed coaxially to the first drive transmitter and is different in material from the first drive transmitter. The first drive transmitter is configured to be fastened to the second drive transmitter and configured to transmit driving force of a drive source (for example, the drive motor 10) to the second drive transmitter.

Increase of the distance between an input-side drive transmission portion of the first drive transmitter at which drive torque is received from the drive source and an output-side drive transmission portion of the first drive transmitter at which load torque is received, causes the first drive transmitter to twist easily in the rotational direction of the first drive transmitter. Twisting of the first drive transmitter in the rotational direction causes variation in rotation speed at the output-side drive transmission portion of the first drive transmitter, so that the rotational accuracy deteriorates.

In the comparative drive unit, the external teeth on the outer circumferential surface of the resin gear that is the first drive transmitter, corresponds to the input-side drive transmission portion at which the drive torque is received from the drive source. The plurality of ribs on the inner circumferential face of the shaft hole of the resin gear, corresponds to the output-side drive transmission portion at which the load torque is received. Thus, according to the comparative drive unit, twisting occurs depending on the distance between the outer circumferential face and the inner circumferential face of the first drive transmitter.

By contrast, according to Aspect 1, due to the fastening between the first drive transmitter and the second drive transmitter, the drive transmission between the first drive transmitter and the second drive transmitter is performed at a fastening portion. The fastening portion is provided between the outer circumferential surface and the inner circumferential surface of the first drive transmitter. Thus, the distance between the output-side drive transmission portion at which the load torque is received and the input-side drive transmission portion at which the drive torque is received, in the first drive transmitter, is made shorter than the distance in the comparative drive unit. As a result, in comparison to the comparative drive unit, the first drive transmitter is restrained from twisting in the rotational direction, so that the rotational accuracy is restrained from deteriorating.

### Aspect 2.

In Aspect 1, the first drive transmitter device (for example, the internally toothed gear 16) is higher in a rate of thermal expansion than the second drive transmitter (for example, the second drive transmitter 9).

Thus, as described in the embodiment, with the first drive transmitter including the internally toothed gear 16, higher in the rate of thermal expansion than the second drive transmitter, adoption of the configuration according to Aspect 1 in which the first drive transmitter is fastened to the second drive transmitter enables the drive transmission to be preferably performed between the first drive transmitter and the second drive transmitter even when the temperature increases.

### Aspect 3.

In Aspect 1 or Aspect 2, the second drive transmitter includes a press-fitting target body (for example, the metal shaft 9b, the bearing 96) and at least one press-fitting body (for example, the metal gear 9a, the pulley 9g, the joint 9f) configured to be press-fitted to the press-fitting target body.

According to this arrangement, as described in the embodiment, the press-fitting target body, such as the metal shaft 9b, and the at least one press-fitting body rotate together. The at least one press-fitting body to the press-fitting target body is centered accurately, so that eccentricity is reduced to the at least one press-fitting body. By contrast, when compared with a configuration in which drive transmission is performed between shafts with engagement of drive pawls, occurrence of deformation (twist) is reduced.

### Aspect 4.

In Aspect 3, wherein the press-fitting target body includes a bearing (for example, the bearing 96) supported by a fixed shaft (for example, the fixed shaft 95).

According to this arrangement, as illustrated in FIGS. 11A and 11B and FIGS. 12A and 12B, the second drive transmitter 9 is provided at the fixed shaft. Accurate centering is performed to the shaft, so that eccentricity is reduced to the at least one press-fitting body. Occurrence of deformation (twist) is reduced.

### Aspect 5.

In Aspect 3 or Aspect 4, the at least one press-fitting body includes at least one of a gear (for example, the metal gear 9a), a pulley (for example, the pulley 9g), and a joint (for example, the joint 9f).

According to this arrangement, twisting eccentricity is reduced, so that accurate drive transmission is performed with restraint of variation in speed.

### Aspect 6.

In any one of Aspect 3 to Aspect 5, the second drive transmitter (for example, the second drive transmitter 9) includes a plurality of press-fitting bodies (for example, the metal gear 9a, the pulley 9g, and the joint 9f).

When compared with the configuration in which the first drive transmitter including the internally toothed gear 16 is fastened to the gear, the pulley, or the joint, fastening is performed at a position near the drive transmission portion of the first drive transmitter (engagement portion between internal teeth and a motor gear). Thus, the first drive transmitter is restrained from twisting. Since the fastening target body is secured by press-fitting, to the press-fitting target body, such as the metal shaft 9b, the fastening target member 9c is restrained from being eccentric. Thus, accurate drive transmission is performed from the first drive transmitter to the gear, the pulley, or the joint through the fastening target member 9c.

### Aspect 7.

In any one of Aspect 3 to Aspect 6, the first drive transmitter (for example, the internally toothed gear 16) is fastened to the at least one press-fitting body (for example, the metal gear 9a, the pulley 9g, and the joint 9f).

According to this arrangement, as described in Variation 1 and Variation 2, the number of components is reduced when compared with a configuration having the fastening target body, so that a reduction in device cost is achieved.

### Aspect 8.

In Aspect 1 or Aspect 2, the second drive transmitter (for example, the second drive transmitter 9) includes a transmission unit (for example, the metal member 92, the metal member 93) including a shaft (for example, the shaft 92b, the shaft 93b) and a drive transmitting portion (for example, the externally toothed gear 92a, the externally toothed gear 93a).

According to this arrangement, as described in Variation 2 and Variation 3, the number of components is reduced when compared with a case in which a metal shaft and a drive transmission body are individually provided, so that a reduction in device cost is achieved.

### Aspect 9.

In Aspect 8, the first drive transmitter (for example, the internally toothed gear 16) is fastened to the transmission unit (for example, the metal member 92).

According to this arrangement, as described in Variation 2, the device cost is reduced with a reduction in the number of components. In addition, since no press-fitting body is required, easy assembly is achieved.

### Aspect 10.

In Aspect 8, the second drive transmitter (for example, the second drive transmitter 9) includes a fastening target body (for example, the fastening target member 9c) configured to be press-fitted to the transmission unit (for example, the metal member 93). The fastening target body is configured to be fastened with the first drive transmitter (for example, the internally toothed gear 16).

According to this arrangement, as described in Variation 3, a portion at which the internally toothed gear 16 is fastened is easily formed outside a drive transmission portion such as an externally toothed gear 93a.

### Aspect 11.

In Aspect 1 or Aspect 2, the second drive transmitter (for example, the second drive transmitter 9) includes a transmission unit (for example, the metal member 92) including a rotary shaft (for example, the shaft 92b), and a fastening target body (for example, the fastening target member 9c) configured to be fastened with the first drive transmitter.

According to this arrangement, as illustrated in FIG. 26, the number of components is reduced when compared to a case in which a metal shaft and a fastening target body are individually provided, so that a reduction in device cost is made normally.

### Aspect 12.

In Aspect 1 or Aspect 2, the second drive transmitter (for example, the second drive transmitter 9) includes a transmission unit (for example, the metal member 92) including a rotary shaft (for example, the metal shaft 9b), a fastening target body (for example, the fastening target member 9c) configured to be fastened with the first drive transmitter, and a coupling body (the key 13, the pin 14) configured to drivingly couple the rotary shaft (9b) and the fastening target body.

The arrangement facilitates, as described with FIGS. 27 and 28, mounting of the fastening target member onto the metal shaft 9b, in comparison to a case where the fastening target member 9c is press-fitted to the metal shaft 9b.

### Aspect 13.

In Aspect 12, the coupling body includes a key (for example, the key 13), a parallel pin, or a spring pin.

According to this arrangement, as described with FIGS. 27 and 28, the fastening target member 9c and the metal shaft 9b are drivingly coupled to each other, so that the driving force transmitted from the internally toothed gear to the fastening target member 9c is transmitted to the metal shaft 9b.

### Aspect 14.

In Aspect 1 or Aspect 2, the second drive transmitter (for example, the second drive transmitter 9) includes a rotary shaft (for example, the metal shaft 9b), a fastening target body (for example, the fastening target member 9c) configured to be fastened with the first drive transmitter (for example, the internally toothed gear 16), and a rotary shaft fastener (for example, the frictional fastening screw 16e) configured to fasten the fastening target body to the rotary shaft.

According to this arrangement, as described with FIGS. 29A and 29B, mounting of the fastening target member onto the metal shaft 9b is facilitated when compared with a configuration in which the fastening target member 9c is press-fitted to the metal shaft 9b.

### Aspect 15.

In Aspect 14, the rotary shaft (for example, the metal shaft 9b) and the fastening target body (for example, the fastening target member 9c) are fixed by frictional fastening by the rotary shaft fastener (for example, the frictional fastening screw 16e).

According to this arrangement, as described with FIGS. 29A and 29B, the fastening target member 9c is favorably centered, similarly to a configuration in which the fastening target member 9c is press-fitted to the metal shaft 9b. Thus, the fastening target member 9c is favorably restrained from being eccentric.

### Aspect 16.

In any one of Aspect 1 to Aspect 15, internal teeth of the first drive transmitter (for example, the internally toothed gear 16) are disposed downstream from a fastening face between the first drive transmitter and the second drive transmitter (for example, the second drive transmitter 9) in a direction in which fastening force acts on the first drive transmitter by fastening.

According to this arrangement, as illustrated in FIGS. 14 to 20, the internal teeth of the internally toothed gear 16 is opposed to part of an externally toothed gear of the second drive transmitter 9. Thus, the size in the axial direction of the drive unit is reduced in comparison to each configuration illustrated in FIGS. 3 to 12B.

### Aspect 17.

In any one of Aspect 1 to Aspect 15, wherein internal teeth of the first drive transmitter (for example, the internally toothed gear 16) are disposed upstream from a fastening face between the first drive transmitter and the second drive transmitter (for example, the second drive transmitter 9) in a direction in which fastening force acts on the first drive transmitter by fastening.

According to this arrangement, each configuration illustrated in FIGS. 3 to 12B is achieved.

### Aspect 18.

In any one of Aspect 1 to Aspect 17, the first drive transmitter (for example, the internally toothed gear 16) is made of resin.

According to this arrangement, as described in the embodiment, vibration and noise at drive transmission is favorably restrained, such as vibration in engagement.

### Aspect 19.

In any one of Aspect 1 to Aspect 18, at least one component included in the second drive transmitter (for example, the second drive transmitter 9) is made of metal.

According to this arrangement, as described in the embodiment, the durability of the device is enhanced. In addition, the rigidity in the rotational direction of the device is enhanced, so that variation in speed is restrained at variation in load.

### Aspect 20.

In any one of Aspect 1 to Aspect 19, a drive transmission face of the first drive transmitter is located apart from an axial center than a drive transmission face of the second drive transmitter (for example, the second drive transmitter 9). The first drive transmitter (for example, the internally toothed gear 16) is fastened to the second drive transmitter between the drive transmission face of the second drive transmitter and the drive transmission face of the first drive transmitter, in a radial direction of the first drive transmitter.

According to this arrangement, as described in the embodiment, the drive transmission face of the first drive transmitter is disposed to be close to the fastening place, when compared with a configuration in which the first drive transmitter is fastened on the axial-center side with respect to the drive transmission face of the second drive transmitter. Thus, the first drive transmitter is restrained from deforming (twisting). Therefore, the rotational accuracy is restrained from deteriorating.

### Aspect 21.

In any one of Aspect 1 to Aspect 19, the first drive transmitter (for example, the internally toothed gear 16) is fastened to the second drive transmitter (for example, the second drive transmitter 9) at a portion that is further apart from an axial center of the first drive transmitter than a drive transmission face of the first drive transmitter from the axial center of the first drive transmitter.

According to this arrangement, as described in Variation 7, a fastening member, such as a screw 16a, is caused not to hit a member that engages with the internal teeth. Thus, a configuration in which the fastening place is provided at a position close to the internal teeth, is easily implemented.

### Aspect 22.

An image forming apparatus (for example, the image forming apparatus 200) includes a rotary body (for example, the intermediate transfer belt 61, the secondary transfer roller 72), and the drive transmission device (for example, the drive unit 20), configured to transmit driving force of the drive source (for example, the drive motor 10) to the rotary body (61).

According to this arrangement, as described in the embodiment, the rotary body is restrained from varying in speed, so that a favorable image is acquired.

### Aspect 23.

In Aspect 22, the rotary body (for example, the intermediate transfer belt 61, the secondary transfer roller 72) includes an intermediate transfer body (for example, the intermediate transfer belt 61).

According to this arrangement, the intermediate transfer body, such as the intermediate transfer belt 61, is restrained from varying in speed at a rise in load torque due to entry of thick paper into a secondary transfer nip, so that an abnormal image, such as banding, is restrained from occurring.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of this disclosure.

Any one of the above-described operations may be performed in various other ways, for example, in an order different from the one described above.

## Claims

1. A drive transmission device (20) comprising:
a first drive transmitter (16) including an internally toothed gear (16); and
a second drive transmitter (9) disposed coaxially to the first drive transmitter (16), the second drive transmitter (9) being different in material from the first drive transmitter (16),
the first drive transmitter (16) being fastened to the second drive transmitter (9) and configured to transmit driving force of a drive source (10) to the second drive transmitter (9).

2. The drive transmission device (20) according to claim 1,
wherein the first drive transmitter (16) is higher in a rate of thermal expansion than the second drive transmitter (9).

3. The drive transmission device (20) according to claim 1 or 2,
wherein the second drive transmitter (9) includes:
a press-fitting target body (9b,96); and
at least one press-fitting body (9a,9g,9f) configured to be press-fitted to the press-fitting target body (9b,96).

4. The drive transmission device (20) according to claim 3, further comprising a fixed shaft (95),
wherein the press-fitting target body includes a bearing (96) supported by the fixed shaft (95).

5. The drive transmission device (20) according to claim 3 or 4,
wherein the at least one press-fitting body (9a,9g,9f) includes at least one of a gear (9a), a pulley (9g), and a joint (9f).

6. The drive transmission device (20) according to any one of claims 3 to 5,
wherein the second drive transmitter (9) includes a plurality of press-fitting bodies (9a,9g,9f),
wherein one of the plurality of press-fitting bodies (9a,9g,9f) is one of a gear (9a), a pulley (9g), and a joint (9f), and
wherein another of the plurality of press-fitting bodies (9a,9g,9f) is a fastening target body (9c) fastened to the first drive transmitter (16).

7. The drive transmission device (20) according to any one of claims 3 to 6,
wherein the first drive transmitter (16) is fastened to the at least one press-fitting body (9a,9g,9f).

8. The drive transmission device (20) according to claim 1 or 2,
wherein the second drive transmitter (9) includes a transmission unit (92,93) including a shaft (92b,93b) and a drive transmitting portion (92a,93a).

9. The drive transmission device (20) according to claim 8,
wherein the first drive transmitter (16) is fastened to the transmission unit (93).

10. The drive transmission device (20) according to claim 8,
wherein the second drive transmitter (9) includes a fastening target body (9c) press-fitted to the transmission unit (93), and
wherein the fastening target body (9c) is fastened with the first drive transmitter (16).

11. The drive transmission device (20) according to claim 1 or claim 2,
wherein the second drive transmitter (9) includes a transmission unit (92) including:
a shaft (92b); and
a fastening target body (9c) fastened with the first drive transmitter (16).

12. The drive transmission device (20) according to claim 1 or claim 2,
wherein the second drive transmitter (9) includes:
a rotary shaft (9b);
a fastening target body (9c) fastened with the first drive transmitter (16); and
a coupling body (13,14) coupling the rotary shaft (9b) and the fastening target body (9c).

13. The drive transmission device (20) according to claim 12,
wherein the coupling body (13,14) includes a key (13), a parallel pin, or a spring pin.

14. The drive transmission device according to claim 1 or claim 2,
wherein the second drive transmitter (9) includes:
a rotary shaft (9b);
a fastening target body (9c fastened to the first drive transmitter; and
a rotary shaft fastener (16e) fastening the fastening target body (9c) to the rotary shaft (9b).

15. An image forming apparatus (200) comprising:
a rotary body (61,72);
the drive source (10); and
the drive transmission device (20) according to any one of claims 1 to 14, configured to transmit the driving force of the drive source (10) to the rotary body (61,72).
